# EUROPEAN PATENT APPLICATION

(11) **EP 2 334 082 A1**
(43) Date of publication of application: **15.06.2011**
(21) Application number: 09814481.9
(22) Date of filing: 04.09.2009
(51) Int. Cl.: H04N 7/32

(54) **SCALABLE VIDEO STREAM DECODING APPARATUS AND SCALABLE VIDEO STREAM GENERATING APPARATUS**

(30) Priority: 17.09.2008 JP 2008238504
(71) Applicant: Sharp Kabushiki Kaisha, Osaka-shi, Osaka 545-8522 (JP)
(72) Inventor: TAKAHASHI, Maki, Osaka-shi, Osaka 545-8522 (JP); INOUE, Satoru, Osaka-shi, Osaka 545-8522 (JP); ITOH, Nori, Osaka-shi, Osaka 545-8522 (JP)
(74) Representative: Müller - Hoffmann & Partner
(86) International application number: PCT/JP2009/065523
(87) International publication number: WO 2010/032636

(57) **Abstract**

A scalable video stream generating apparatus according to the present invention sorts encoded images into a plurality of encoded-image streams based on whether or the encoded images are to be used as reference frames, and assigns different identifiers to the plurality of encoded-image streams. A scalable video stream decoding apparatus according to the present invention (i) receives a plurality of encoded-image stream generated by the scalable video stream generating apparatus according to the present invention, (ii) reorders, in order of decoding, encoded images included in at least one encoded-image stream extracted based on identifiers assigned to the plurality of encoded-image stream, and (iii) decodes the encoded images thus reordered. Thus, it is possible to provide a scalable video stream system having a simple arrangement.

## Description

### Technical Field

The present invention relates to a digital video system. More specifically, the present invention relates to a scalable video stream decoding apparatus for decoding a temporal scalable video stream, and a scalable video stream generating apparatus for generating a temporal scalable video stream.

### Background Art

Recently, there have been developed scalable video systems in each of which a reproduction quality is selective. In such scalable video systems, a video stream generating apparatus generates a plurality of video streams and a reproduction (decoding) apparatus selectively decodes all of or a part of the plurality of video streams.

Selective types of reproduction qualities are, for example, frame frequency, resolution, and quantization error of pixels. Respective scalable video systems corresponding to the selective types of reproduction qualities are called a temporal scalable video system, a spatially scalable video system, and an SNR scalable video system.

Among them, the temporal scalable video system is effective as a technique for efficiently transmitting appropriate streams to various reproduction apparatuses, because the reproduction apparatuses can select a frame rate for reproduction in accordance with their own decoding capabilities.

The temporal scalable video system is disclosed in Non-patent Literature 1 (MPEG-4 Video standard), for example. The MPEG-4 Video standard is one technique of hybrid coding, which is generally used for encoding a dynamic picture image. Hybrid coding is an encoding method in which a technique for compressing a spatial redundancy in a frame is combined with a technique for compressing a temporal redundancy between the frame and frame(s) positioned before and/or after the frame. For example, the temporal redundancy can be removed by a technique called motion compensation prediction or just prediction. Motion compensation prediction is a technique in which similar portions between an encoding frame and frame(s) before and/or after the encoding frame are associated with each other, and a predicted image that is presumably proximate to the encoding frame is generated from the frame(s) before and/or after the encoding frame. The temporal redundancy can be removed by finding a difference between the image generated by the motion compensation prediction and the encoding frame.

In the Description of the present invention, a frame (e.g., frame(s) positioned before and/or after an encoding frame) used for prediction is referred to as "reference frame", information indicative of correspondence of similar portions between the encoding frame and the reference frames is referred to as "motion vector", an image created by prediction based on the motion vector and the reference frames is referred to as "predicted image", and a difference between the encoding frame and the predicted image is referred to as "residual image". Further, a method for finding a residual image as such is called inter-frame prediction coding mode, whereas a method for compressing a spatial redundancy in a frame without prediction is called intra prediction coding mode. These modes are collectively called coding modes.

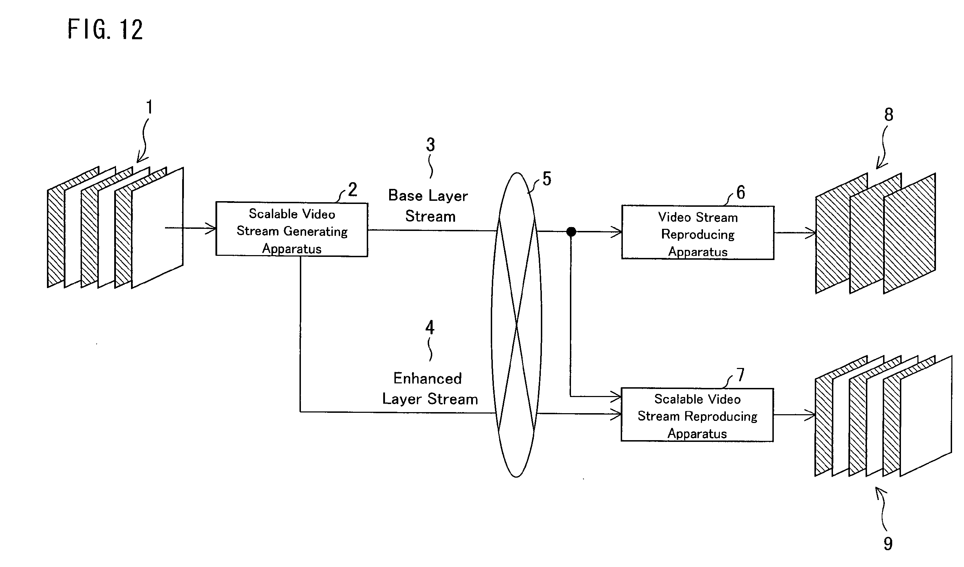

The following describes the temporal scalable video system disclosed in Non-patent Literature 1 with reference to drawings. Fig. 12 is a block diagram briefly illustrating a conventional temporal scalable video system.

As illustrated in Fig. 12, a scalable video stream generating apparatus 2 processes an inputted video image 1 to generate two video streams, a base layer stream 3 and an enhanced layer stream 4. The base layer stream 3 is a video stream obtained by encoding frames that are schematically shown as shaded frames in Fig. 12, among frames included in the video image 1. In the meantime, the enhanced layer stream 4 is a video stream obtained by encoding differences between the shaded frames and white frames.

These video streams are transmitted, via a transmission channel 5, to a video stream reproducing (decoding) apparatus 6 and a scalable video stream reproducing (decoding) apparatus 7. The video stream reproducing apparatus 6 decodes only the base layer stream 3, and reproduces a video image 8 made up of the shaded frames among a plurality of frames included in the video image 1. On the other hand, the scalable video stream reproducing apparatus 7 decodes the base layer stream 3 and the enhanced layer stream 4, and reproduces a video image 9, which has the same frame rate as the video image 1. Thus, in the temporal scalable video system, different reproducing apparatuses have different frame rates for reproduction.

The scalable video stream reproducing apparatus 7 decodes the base layer stream 3 and the enhanced layer stream 4 in the following manner.

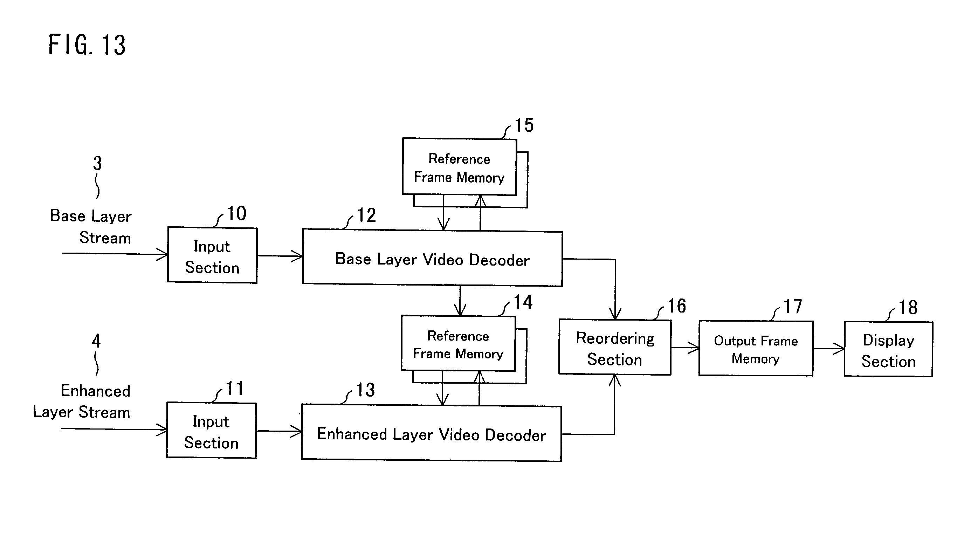

Fig. 13 is a block diagram illustrating an essential part of an arrangement of the scalable video stream reproducing apparatus 7 in the conventional temporal scalable video system. As illustrated in Fig. 13, a base layer stream 3 is inputted via an input section 10 into a base layer video decoder 12. The base layer video decoder 12 decodes the base layer stream 3. Decoded frames are stored as reference frames in a reference frame memory section 15 of the base layer video decoder 12 and a reference frame memory section 14 of an enhanced layer video decoder 13.

On the other hand, an enhanced layer stream 4 is inputted via an input section 11 into an enhanced layer video decoder 13. In the reference frame memory section 14 of the enhanced layer video decoder 13 are stored the reference frames obtained from the base layer video decoder 12 and reference frames generated by the enhanced layer video decoder 13 itself. The enhanced layer video decoder 13 decodes the enhanced layer stream 4 with the use of these reference frames as reference frames.

The base layer stream 3 and the enhanced layer stream 4 are obtained by separating the video image 1 as described above. Frames decoded by the base layer video decoder 12 and the enhanced layer video decoder 13 are reordered by a reordering section 16, so that a video image having the same frame rate as the original video image 1 can be obtained. The frames thus reordered are temporarily stored in an output frame memory 17, and displayed by a display section 18 with precise timing.

In the meantime, in the video stream reproducing apparatus 6, although the frame rate for reproduction is reduced, only the base layer stream 3 is decoded to reproduce the video image 1.

### Citation List

### Patent Literature 1

Japanese Patent Application Publication, Tokukai, No. 2000-156839 A (Publication Date: June 6, 2000)

### Non-patent Literature 1

ISO/IEC 14496-2: 2004 MPEG-4 Video Standard (Publication Date: July 2004)

### Summary of Invention

### Technical Problem

However, the conventional scalable video stream reproducing (decoding) apparatus requires respective decoding means for the base layer and the enhanced layer, and therefore, it has a complicated arrangement.

The present invention is accomplished in view of the above problem. An object of the present invention is to provide (i) a scalable video stream decoding apparatus having a simple arrangement, and (ii) a scalable video stream generating apparatus for generating an encoded-image stream, which can be optimally decoded by the scalable video stream decoding apparatus.

### Solution to Problem

### (Scalable Video Stream Generating Apparatus)

A scalable video stream generating apparatus according to the present invention includes: encoding means for encoding a plurality of input frames by use of motion compensation prediction so as to form encoded images; and sorting means for sorting the encoded images thus formed by the encoding means, into a plurality of encoded-image streams. In the scalable video stream generating apparatus according to the present invention, the sorting means performs the sorting based on whether or not an encoded image to be sorted has been used as a reference frame for the motion compensation prediction performed when the encoding means encodes an input frame, and the sorting means assigns different identifiers to the plurality of encoded-image streams into which the encoded images have been sorted.

In the above arrangement, the scalable video stream generating apparatus according to the present invention encodes a plurality of input frames included in an input video image by use of motion compensation prediction so as to form encoded images. The scalable video stream generating apparatus then sorts the encoded images thus formed, into a plurality of encoded-image streams, for example, a base layer stream and an enhanced layer stream. The sorting is performed in such a manner that a target image to be sorted is classified into a corresponding encoded-image stream based on whether or not the target image has been used as a reference frame for the motion compensation prediction performed when an input frame is encoded.

With the above arrangement, it is possible to perform the sorting so that pieces of data obtained by encoding reference frames to be used for the decoding of images are all sorted into a single decode image stream. A plurality of encoded-image streams generated in this manner can be preferably used in a scalable video stream decoding apparatus according to the present invention.

Further, in the above arrangement, different identifiers are assigned to respective encoded-image streams. This arrangement allows a scalable video stream decoding apparatus to easily identify an encoded-image stream to be decoded. For example, for a scalable video stream decoding apparatus having a low reproduction capability, such an operation can be easily performed that only a base layer stream is decoded and reproduced, while an enhanced layer stream is abandoned.

### (Scalable Video Stream Decoding Apparatus)

In order to achieve the above object, a scalable video stream decoding apparatus according to the present invention includes: at least one stream receiving means for receiving a plurality of encoded-image streams generated by a scalable video stream generating apparatus according to the present invention; reordering means for (i) extracting at least one encoded-image stream to be decoded from among the plurality of encoded-image streams thus received by the at least one stream receiving means, based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and decoding means for decoding the encoded images thus reordered by the reordering means.

In the above arrangement, the scalable video stream decoding apparatus according to the present invention receives a base layer stream and an enhanced layer stream, which are usable in a scalable video system, and then reorders, before decoding these streams, encoded images included in the streams in accordance with respective pieces of display timing information or decoding timing information of the encoded images so as to obtain a single stream. Accordingly, the decoding may be performed on the encoded images thus reordered. Namely, the above arrangement makes it possible to decode a plurality of encoded-image streams by single decoding means, thereby making it possible to simplify an entire arrangement of the apparatus.

Further, in the above arrangement, an encoded-image stream to be decoded is identified based on identifiers assigned to the encoded-image streams. This makes it possible to easily identify a target encoded-image stream to be decoded. For example, for a scalable video stream decoding apparatus having a low reproduction capability, such an operation can be easily performed that only a base layer stream is decoded and reproduced, while an enhanced layer stream is abandoned.

In the scalable video stream decoding apparatus, it is preferable that (i) the at least one stream receiving means include a plurality of stream receiving means and (ii) the scalable video stream decoding apparatus further include: detection means for detecting a state of the scalable video stream decoding apparatus; and input control means for controlling at least one of the plurality of stream receiving means to operate or not to operate, in accordance with the state detected by the detection means.

In the above arrangement, the scalable video stream decoding apparatus according to the present invention detects a state of the scalable video stream decoding apparatus itself, and controls at least one of the plurality of stream receiving means to operate or not to operate, in accordance with the state.

With the above arrangement, when the scalable video stream decoding apparatus is in such a state that, for example, battery power is almost exhausted, the temperature of the apparatus is high, the cover of the apparatus is closed, the apparatus is on the move, the motion of an image is small, or the like, at lease one of the stream receiving means is controlled not to operate, so as to adjust the throughput of the decoding process appropriately, thereby reducing power consumption.

### (Scalable Video Stream Decoding Method)

A scalable video stream decoding method according to the present invention includes the steps of: (a) receiving a plurality of encoded-image streams generated by a scalable video stream generating apparatus according to the present invention; (b) performing a reordering process of (i) extracting at least one encoded-image stream to be decoded from among the plurality of encoded-image streams thus received in the step (a), based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and (c) decoding the encoded images thus reordered in the step (b).

The above arrangement yields an effect similar to the effect of the scalable video stream decoding apparatus according to the present invention.

### (Control Method of Scalable Video Stream Decoding Apparatus)

A control method according to the present invention for controlling a scalable video stream decoding apparatus is a control method for controlling a scalable video stream decoding apparatus that includes: a plurality of stream receiving means for receiving a plurality of encoded-image streams generated by a scalable video stream generating apparatus according to the present invention; reordering means for (i) extracting at least one encoded-image stream to be decoded from among the plurality of encoded-image streams thus received by the plurality of stream receiving means, based on identifiers assigned to the plurality of encoded-image streams, and (ii) reordering, in order of decoding, encoded images constituting the at least one encoded-image stream thus extracted, in accordance with respective pieces of display timing information or decoding timing information of the encoded images; and decoding means for decoding the encoded images thus reordered by the reordering means. The control method of the present invention includes the steps of: (a) detecting a state of the scalable video stream decoding apparatus; and (b) performing an input control of controlling at least one of the plurality of stream receiving means to operate or not to operate, in accordance with the state detected in the step (a).

The above arrangement yields an effect similar to the effect of the scalable video stream decoding apparatus according to the present invention.

### (Scalable Video Stream Generation Method)

A scalable video stream generation method according to the present invention includes the steps of: (a) encoding a plurality of input frames by use of motion compensation prediction so as to form encoded images; and (b) sorting the encoded images thus formed in the step (a), into a plurality of encoded-image streams. In the step (b), the sorting is performed based on whether or not an encoded image to be sorted has been used as a reference frame for the motion compensation prediction performed when the encoding means encodes an input frame, and different identifiers are assigned to the plurality of encoded-image streams into which the encoded images have been sorted.

The above arrangement yields an effect similar to the effect of the scalable video stream generating apparatus according to the present invention.

### (Program and Storage Medium)

The scalable video stream decoding apparatus and the scalable video stream generating apparatus may be realized by a computer. In this case, (a) a scalable video stream decoding program that realizes the scalable video stream decoding apparatus in a computer by causing the computer to work as each of the means of the scalable video stream decoding apparatus, (b) a scalable video stream generation program that realizes the scalable video stream generating apparatus in a computer by causing the computer to work as each of the means of the scalable video stream generating apparatus, and (c) computer-readable storage media in which these programs are stored are also included in the scope of the present invention.

Further, the scalable video stream decoding method, the scalable video generation method, and the control method for controlling a scalable video stream decoding apparatus may be also realized by a computer. In this case, (a) a scalable video stream decoding program that realizes the scalable video stream decoding method in a computer by causing the computer to perform each of the steps in the scalable video stream decoding method, (b) a scalable video stream generation program that realizes the scalable video stream generation method in a computer by causing the computer to perform each of the steps in the scalable video stream generation method, (c) a control program for controlling a scalable video stream apparatus, which control program realizes in a computer the control method for controlling a scalable video stream decoding apparatus, by causing the computer to perform each of the steps in the control program, and (d) computer-readable storage media in which these programs are stored are also included in the scope of the present invention.

### Advantageous Effects of Invention

The present invention can provide (i) a scalable video stream decoding apparatus having a simple arrangement, and (ii) a scalable video stream generating apparatus for generating an encoded-image stream, which can be optimally decoded by the scalable video stream decoding apparatus.

### Brief Description of Drawings

Fig. 1

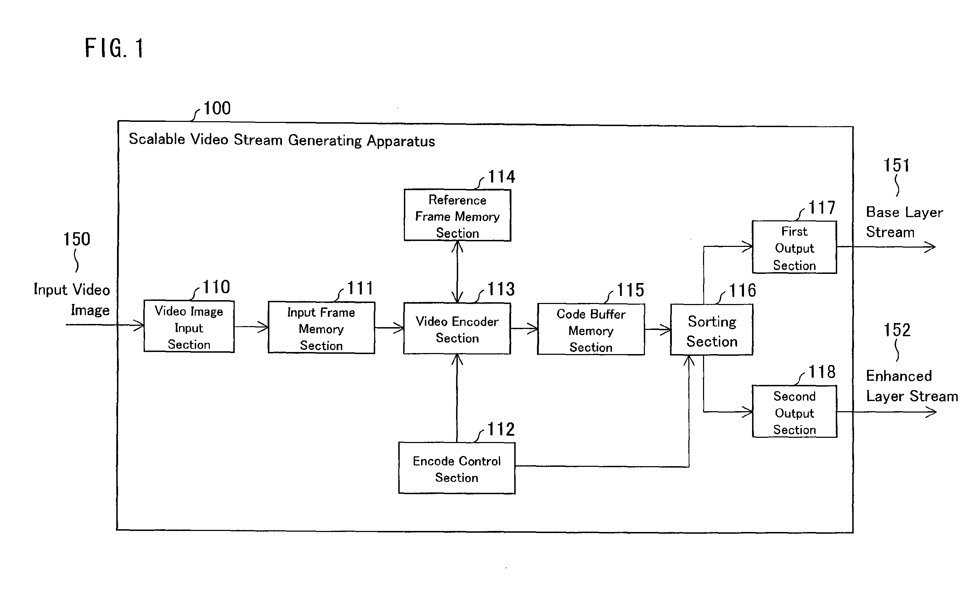

   Fig. 1 is a block diagram illustrating an essential part of an arrangement of a scalable video stream generating apparatus according to one embodiment of the present invention.
Fig. 2

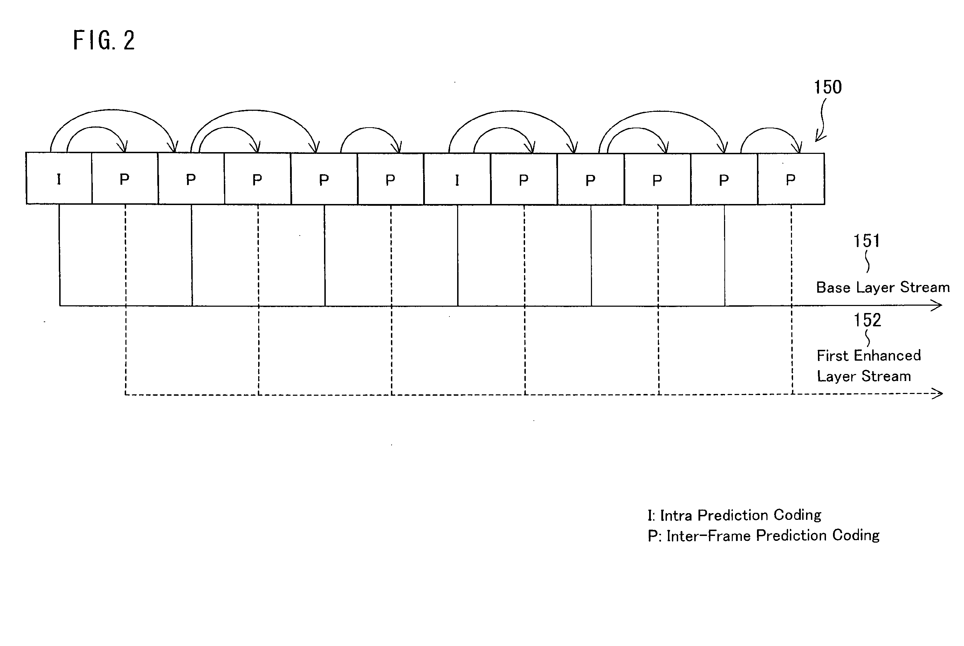

   Fig. 2 is an explanatory diagram briefly illustrating input data and output data of a scalable video stream generating apparatus according to one embodiment of the present invention.
Fig. 3

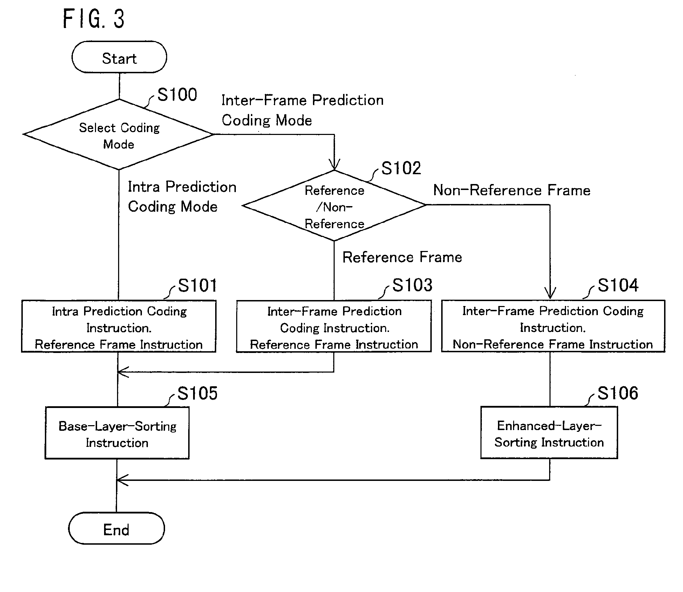

   Fig. 3 is a flowchart illustrating an operation of an encode control section of a scalable video stream generating apparatus according to one embodiment of the present invention.
Fig. 4

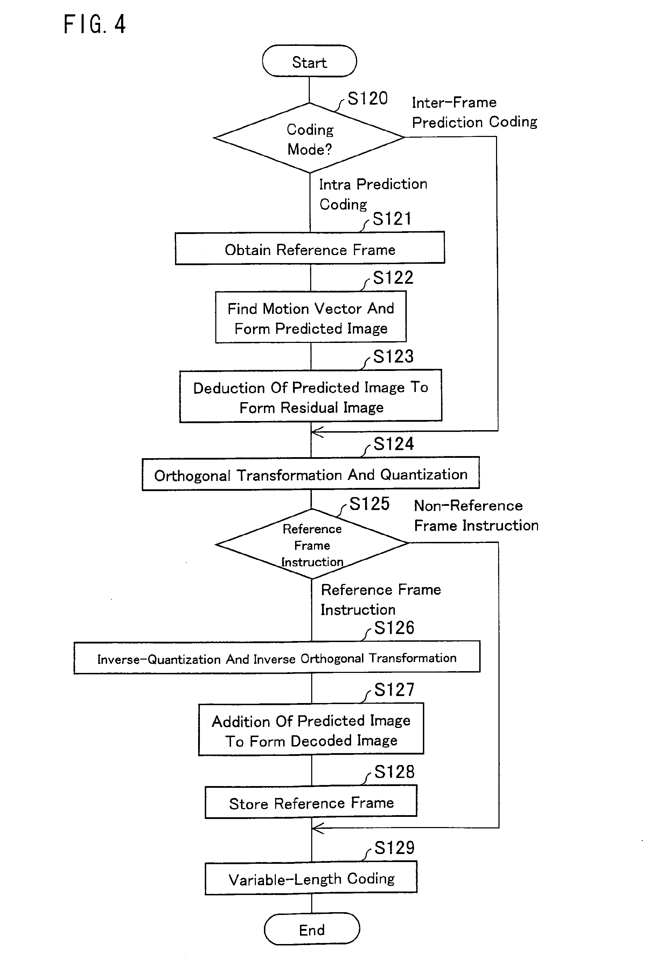

   Fig. 4 is a flowchart illustrating an operation of a video encoder section of a scalable video stream generating apparatus according to one embodiment of the present invention.
Fig. 5

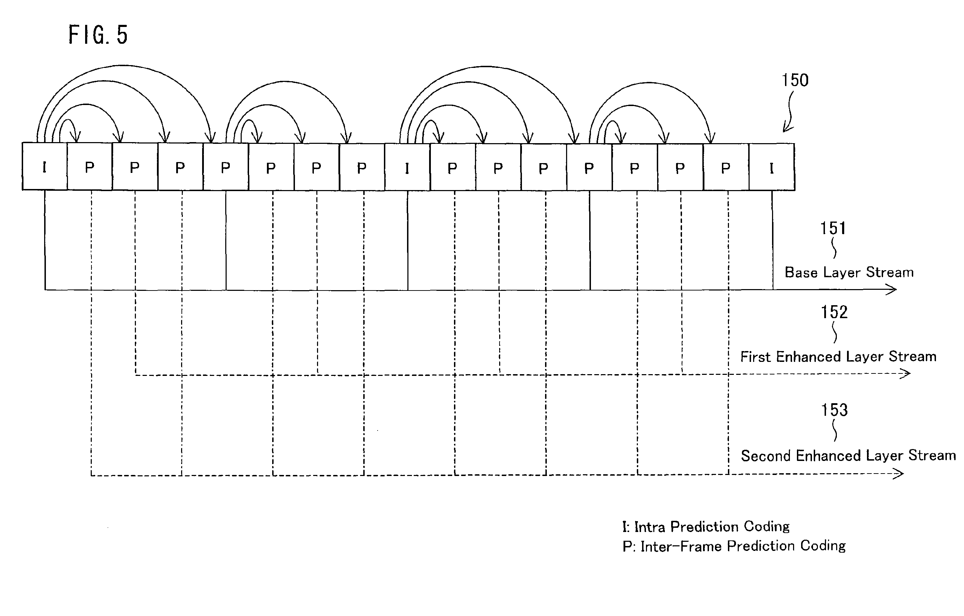

   Fig. 5 is an explanatory diagram briefly illustrating input data and output data of a scalable video stream generating apparatus according to one embodiment of the present invention.
Fig. 6

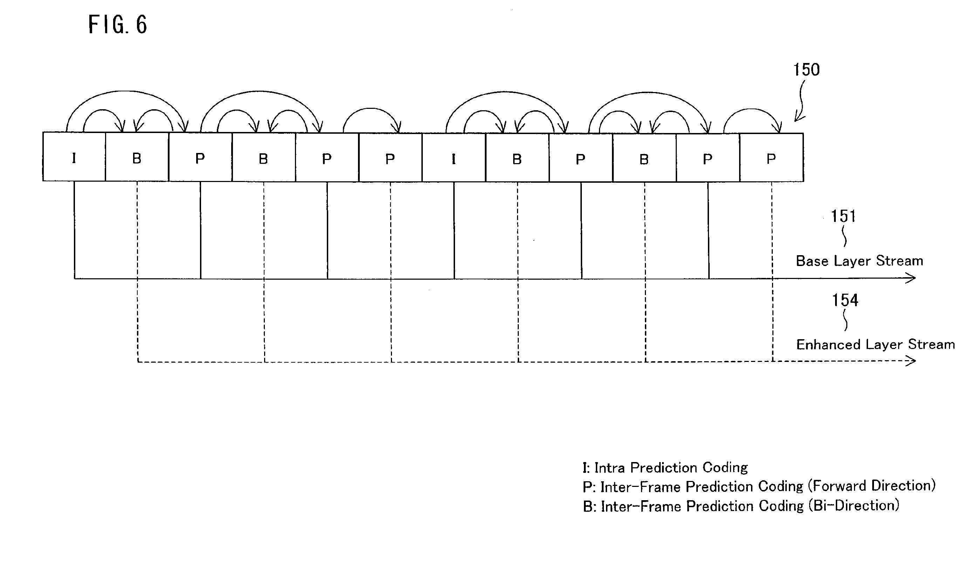

   Fig. 6 is an explanatory diagram briefly illustrating input data and output data of a scalable video stream generating apparatus according to one embodiment of the present invention.
Fig. 7

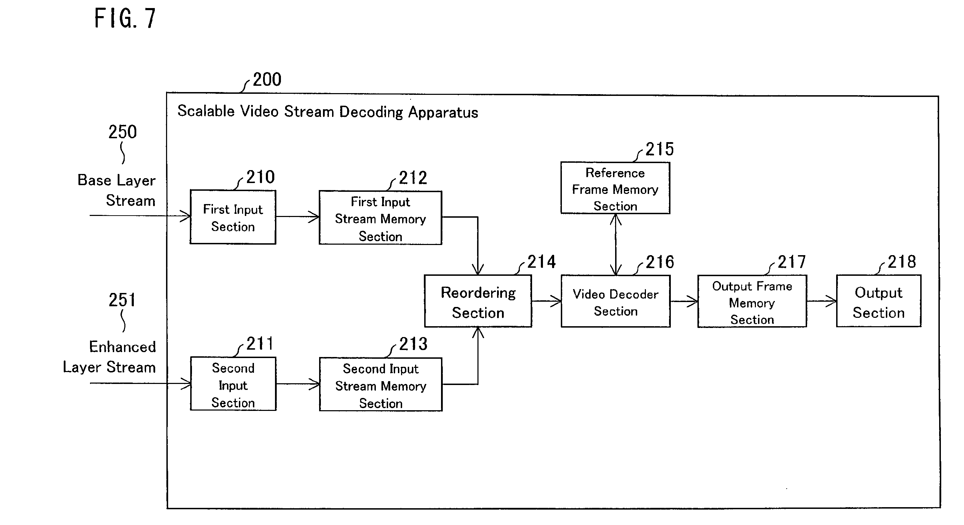

   Fig. 7 is a block diagram illustrating an essential part of an arrangement of a scalable video stream decoding apparatus according to one embodiment of the present invention.
Fig. 8

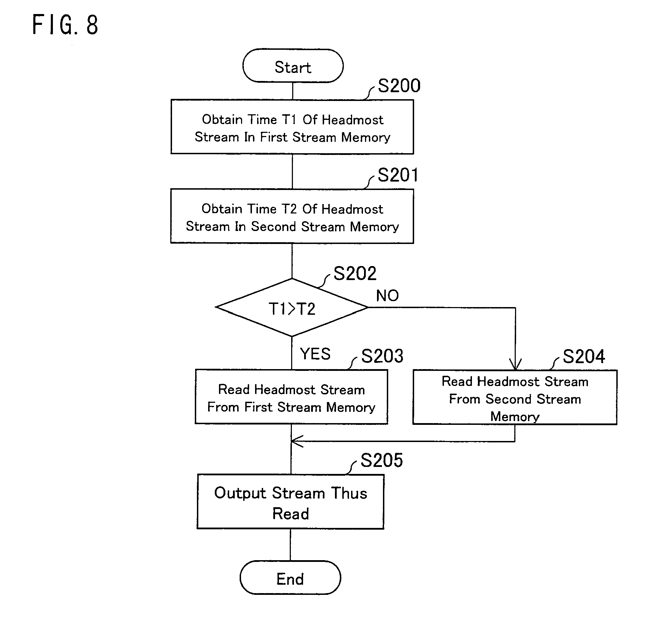

   Fig. 8 is a flowchart illustrating an operation of a reordering section of a scalable video stream decoding apparatus according to one embodiment of the present invention.
Fig. 9

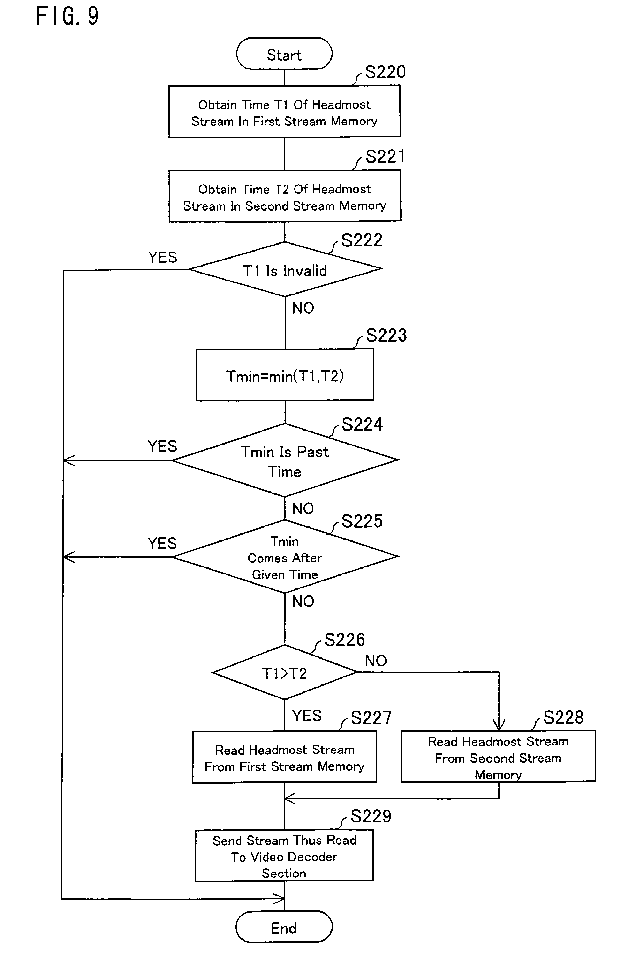

   Fig. 9 is a flowchart illustrating an operation of a reordering section of a scalable video stream decoding apparatus according to one embodiment of the present invention.
Fig. 10

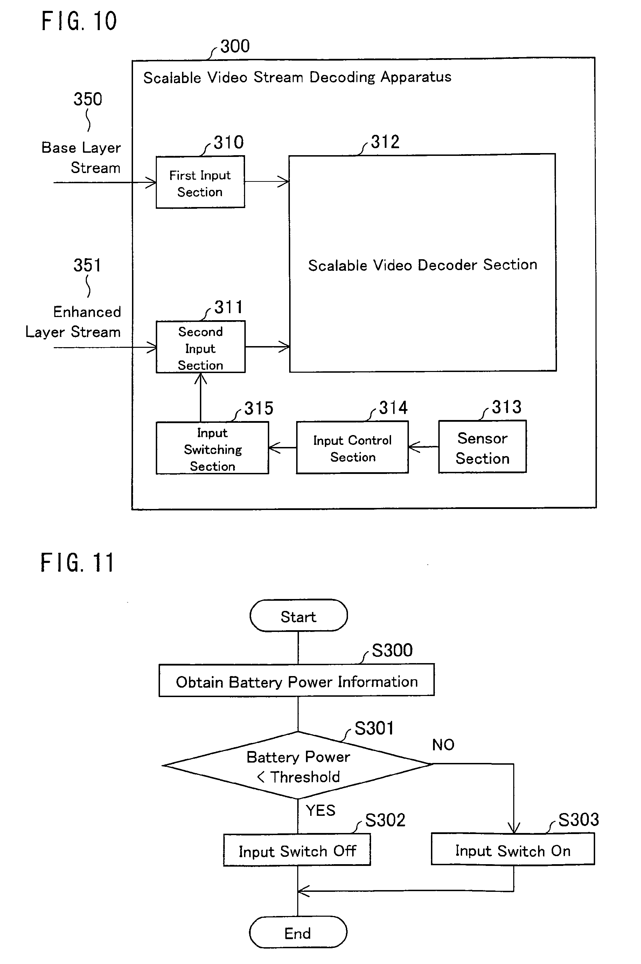

   Fig. 10 is a block diagram illustrating an essential part of an arrangement of a scalable video stream decoding apparatus according to one embodiment of the present invention.
Fig. 11
   Fig. 11 is a flowchart illustrating an input control section of a scalable video stream decoding apparatus according to one embodiment of the present invention.
Fig. 12
   Fig. 12 is a block diagram briefly illustrating a conventional temporal scalable video system.
Fig. 13
   Fig. 13 is a block diagram illustrating an essential part of an arrangement of a reproducing apparatus in a conventional temporal scalable video system.

### Description of Embodiments

As a result of their diligent study, the inventors of the present invention found the following fact. That is, scalable streams in which reference frames are ingeniously selected are generated, and they are reordered and put together as a single stream for decoding so that decoding can be performed by a single decoder. The inventors of the present invention accomplished the invention based on the fact.

The following describes an embodiment of the present invention with reference to drawings.

In the present Description, long terminologies exemplified below are abbreviated by abbreviations. That is, MPEG indicates Moving Picture Experts Group; AVC indicates Advanced Video Coding; fps indicates frame per second; PES indicates Packetized Elementary Stream; TS indicates Transport Stream; PTS indicates Presentation Time Stamp; SEI indicates Supplemental Enhancement Information.

### [1: Scalable Video Stream Generating Apparatus]

Fig. 1 is a block diagram illustrating an essential part of an arrangement of a scalable video stream generating apparatus 100 according to one embodiment of the present invention. As illustrated in Fig .1, the scalable video stream generating apparatus 100 according to the present embodiment includes a video image input section 110, an input frame memory section 111, a reference frame memory section 114, a video encoder section (encoding means) 113, an encode control section 112, a code buffer memory section 115, a sorting section (sorting means) 116, a first output section 117, and a second output section 118.

The scalable video stream generating apparatus 100 encodes a plurality of input frames (input images) included in an input video image 150, by use of motion compensation prediction, so as to form encoded images. Then, the scalable video stream generating apparatus 100 sorts the encoded images thus formed into a base layer stream 151 and an enhanced layer stream 152. The sorting of an image is carried out based on whether or not the image has been used as a reference frame (reference image) for motion compensation prediction performed when an input frame is encoded. More specifically, in a case where the image has been used as the reference frame, encoded data of the image is sorted into the base layer stream 151, whereas in a case where the image has not been used as the reference frame, the encoded data of the image is sorted into the enhanced layer stream 152.

With the arrangement, the sorting can be carried out such that encoded data of reference frames for use in decoding of the image are all sorted into the base layer stream 151. A plurality of encoded-image streams generated in this manner can be optimally decoded by a scalable video stream decoding apparatus of the present invention.

### (Example of Operation)

One example of how the scalable video stream generating apparatus 100 operates is described below more specifically.

Initially explained are examples of (i) what kind of input data is processed by the scalable video stream generating apparatus 100 and (ii) what kind of output data is generated by the scalable video stream generating apparatus 100. Fig. 2 is an explanatory diagram briefly illustrating input data (the input video image 150) and output data (the base layer stream 151 and the enhanced layer stream 152).

The input video image 150 is made up of a plurality of frames having different display timings. The input video image 150 may be, for example, an ordinary moving image. In Fig. 2, frames included in the input video image 150 are illustrated as squares aligned from left to right in display sequence.

Among these frames, frames indicated by "I" (hereinafter referred to as "I-frame") are subjected to intra prediction coding carried out by the scalable video stream generating apparatus 100, and frames indicated by "P" (hereinafter referred to as "P-frame") are subjected to inter-frame prediction coding carried out by the scalable video stream generating apparatus 100, for example. In Fig. 2, a circular arc arrow indicates a relationship between a reference frame and an encoding frame to be encoded by use of the reference frame, during the inter-frame prediction coding. That is, a frame indicated by the arrow is subjected to the inter-frame prediction coding with the use of a frame at the tail of the arrow as a reference frame. For example, in two leftmost frames, an arrow from an I-frame toward a P-frame means that the P-frame refers to the I-frame for prediction. Which frame is taken as an I-frame or P-frame and which frame is taken as a reference frame will be described later.

The scalable video stream generating apparatus 100 sorts encoded data of each of the frames into the base layer stream 151 or the enhanced layer stream 152. The sorting is performed per frame. The scalable video stream generating apparatus 100 performs the sorting such that pieces of encoded data of reference frames to be used for decoding of the frames are all sorted into the base layer stream 151.

The encoded data of each of the frames sorted into the base layer stream 151 or the enhanced layer stream 152 is associated with information on its corresponding display timing (display time) in the input video image 150.

The following deals with details of how each section in the scalable video stream generating apparatus 100 operates.

The video image input section 110 associates each of the frames to be encoded in the input video image 150 with its corresponding display timing, and stores them in the input frame memory section 111.

The video encoder section 113 performs compression encoding on each of the frames thus stored in the input frame memory section 111 in an intra-frame coding mode or an inter-frame prediction coding mode, and stores encoded data thereof in the code buffer memory section 115. Details of how to encode the frames will be described later. The coding modes of the video encoder section 113 are controlled by the encode control section 112.

Further, the sorting section 116 sorts the encoded data thus stored in the code buffer memory section 115, into the first output section 117 (the base layer stream 151) or the second output section 118 (the enhanced layer stream 152). More details of how to sort the encoded data will be described later. The sorting is controlled by the encode control section 112.

As has been already described, in the base layer stream 151 and the enhanced layer stream 152, pieces of encoded data of the frames are associated with respective pieces of display timing information, which are to be used as display timings of the frames in the after-mentioned scalable video stream decoding apparatus. That is, when the video encoder section 113 encodes each of the frames and stores encoded data thereof in the code buffer memory section 115, the encoded data is stored in association with display timing information. In the meantime, when the sorting section 116 sorts the encoded data into the first output section 117 or the second output section 118, the encoded data is sorted in association with the display timing information. Associating specific information with another information means that when the specific information is referred to, the another information is also obtainable. In the present embodiment, the decoding order of pieces of encoded data coincides with the order of pieces of display timing information assigned to each stream, and the pieces of encoded data are reordered with the use of the pieces of display timing information. Alternatively, as described later, instead of the display timing information or in addition to the display timing information, encoded data may be associated with decoding timing information indicative of a decoding start time of a frame corresponding to the encoded data.

Further, the scalable video stream generating apparatus 100 (the first output section 117 and the second output section 118) may assign different codes to respective encoded-image streams (the base layer stream 151 and the enhanced layer stream 152). In this case, a scalable video stream decoding apparatus, which receives the base layer stream 151 and the enhanced layer stream 152, identifies an encoded-image stream to be decoded, based on respective identifiers of the encoded-image streams. As such, the identification of an encoded-image stream to be decoded can be performed easily.

Next will be explained how the encode control section 112 operates, with reference to Fig. 3. Fig. 3 is a flowchart illustrating how the encode control section 112 works on a single input frame. The encode control section 112 performs the same process as below on all the input frames.

The encode control section 112 initially selects a coding mode for encoding of an input frame (Step S100). The selection of a coding mode may be performed by various methods, such as a method in which an intra prediction coding mode is switched to an inter-frame prediction coding mode or vice versa at specific time intervals, a method in which a coding mode is selected based on which mode is suitable for the input frame, and the like methods. The specific time intervals can be determined based on a balance between coding amount and transmission error resilience to be required. Generally, as the intra prediction coding mode is selected more frequently, the transmission error resilience becomes higher and the coding amount increases.

In Step S100, in a case where the intra prediction coding mode is selected, the encode control section 112 sends an intra prediction coding instruction signal and a reference frame instruction signal to the video encoder section 113 (Step S101). The reference frame instruction is an instruction to allow the input frame to be used as a reference frame for encoding of another frame. Further, a non-reference frame instruction is an instruction not to allow the input frame to be used as a reference frame for encoding of another frame. How the video encoder section 113 operates in response to such instructions will be described later.

On the other hand, in a case where the inter-frame prediction coding mode is selected in Step S100, the encode control section 112 selects whether or not a frame that is obtained by encoding the input frame and then decoding the input frame thus encoded is to be used as a reference frame when another frame is encoded (Step S102). That is, the encode control section 112 selects whether or not a frame that is obtained by encoding the input frame and then decoding the input frame thus encoded is to be used as a frame at the tail of an arrow in Fig. 2. The selection may be performed, for example, in such a manner that an option of "usable" as the reference frame is switched to an option of "unusable" as the reference frame or vice versa at specific time intervals. The specific time intervals may be appropriately set according to a ratio (for example, 1:1) between frames to be sorted to the base layer stream 151 and frames to be sorted to the enhanced layer stream 152.

In Step S102, in a case where the option of allowing the input frame to be used as the reference frame is selected in Step S102, the encode control section 112 sends to the video encoder section 113 an inter-frame prediction coding instruction signal and a reference frame instruction signal (Step S103).

On the other hand, in a case where the option of not allowing the data to be used as the reference frame is selected in Step S102, the encode control section 112 sends to the video encoder section 113 an inter-frame prediction coding instruction signal and a non-reference frame instruction signal (Step S104).

Subsequently, in a case where the video encoder section 113 receives a reference frame instruction signal in Step S101 or Step S103, the encode control section 112 sends to the sorting section 116 a base-layer-sorting instruction signal so that encoded data of the input frame is sorted into the base layer stream 151 (Step S105).

On the other hand, in a case where the video encoder section 113 receives a non-reference frame instruction signal in Step S104, the encode control section 112 sends to the sorting section 116 an enhanced-layer-sorting instruction signal control so that encoded data of the input frame is sorted into the enhanced layer stream 152 (Step S106).

Next will be explained details of how the video encoder section 113 operates. Fig. 4 is a flowchart illustrating how the video encoder section 113 works on a single input frame. The video encoder section 113 performs the same process as below on all encoding frames to be encoded.

The video encoder section 113 initially checks a coding mode instruction signal received from the encode control section 112 (Step S120). In a case where the coding mode instruction signal indicates an inter-frame prediction coding, the video encoder section 113 performs motion compensation prediction in accordance with Step S121 to Step S123.

Initially, the video encoder section 113 obtains a reference frame from the reference frame memory section 114 (Step S121). Then, the video encoder section 113 compares the reference frame with the input frame to find a motion vector, and forms a predicted image (Step S122). The video encoder section 113 deducts the predicted image from an image of the input frame based on pixel value levels, and obtains a residual image (Step S123).

On the other hand, in a case where the coding mode instruction indicates an intra prediction coding instruction, the video encoder section 113 does not deduct the predicted image from the input frame, but uses the input frame itself as the residual image.

Subsequently, the video encoder section 113 divides the residual image into portions, for example, by 8 x 8 pixels, i.e., 64 pixels. Then, the video encoder section 113 performs orthogonal transformation, such as discrete cosine transform, and quantization on the portions so as to form matrices of coefficients (Step S124).

Subsequently, the video encoder section 113 checks a reference frame instruction signal (Step S125). In a case where the reference frame instruction signal indicates a reference frame instruction, the video encoder section 113 makes preparations so that the input frame is usable as a reference frame for another frame (Steps S126 to S128 as below). It should be understood that a decoding apparatus uses, as a reference frame, a decoded frame obtained from a stream, and therefore an encoding apparatus does not use the input frame itself as a reference frame, but uses a decoded frame obtained by decoding encoded data of the input frame.

More specifically, the video encoder section 113 performs inverse-transformation on the matrices of coefficients thus obtained in Step S124, so as to restore the residual image (Step S126). Then, the video encoder section 113 adds to the residual image to the predicted image formed in Step S122, so as to obtain a decoded frame (Step S127). The video encoder section 113 stores the decoded frame in the reference frame memory section 114, so that the decoded frame can be used as a reference frame for encoding of another frame (Step S128). Further, the video encoder section 113 records, into a bitstream containing encoded data of the input frame, a flag indicative of whether or not a decoded frame obtained by decoding the encoded data has been used as a reference frame.

Finally, the video encoder section 113 performs variable-length coding on the matrices of coefficients obtained in Step S124 (Step S129). When the inter-frame prediction coding is performed, the video encoder section 113 also records, into the stream, information that specifies a reference frame. The bitstream thus obtained is stored in the code buffer memory section. Note that a stream stored in the code buffer memory section is a single stream, which is not separated into a base layer and an enhanced layer, so that the stream can be decoded by general video decoders.

The sorting section 116 takes out the bitstream from the code buffer memory section 115, and performs sorting on the bitstream as follows: In a case where a sorting instruction signal received from the encode control section 112 indicates a base-layer sorting instruction, the sorting section 116 sends the bitstream to the first output section 117, whereas in a case where the sorting instruction signal indicates an enhanced-layer-sorting instruction, the sorting section 116 sends the bitstream to the second output section 118. At this time, the sorting section 116 outputs the bitstream in a format in which the bitstream corresponding to a single frame is associated one-on-one with its display timing (time) obtained when the input video image 150 is inputted.

The first output section 117 outputs the base layer stream 151, and the second output section 118 outputs the enhanced layer stream 152. At this time, the first output section 117 and the second output section 118, for example, may assign different PIDs to the base layer stream 151 and the enhanced layer stream 152, and TS-packetize these streams.

### (Advantages of the Present Embodiment)

In the above arrangement, instead of using an encoding device for scalable encoding, streams obtained through a normal encoding process are just sorted as appropriate. This realizes a scalable video stream generating apparatus that can easily produce a base layer stream and an enhanced layer stream.

### (Modified Example 1: Input Means is Modified)

In the above description, the video image input section 110 is assumed as memory means. However, the video image input section 110 may be other means, for example, communications control means, image capture means, or means having a decoding function of another video coding method. Such an arrangement allows the scalable video stream generating apparatus 100 to be applied to various systems such as a system in which an input from a communications path or camera is encoded and transmitted in real time, and a system in which an input is retransmitted with a coding method being changed.

### (Modified Example 2: Coding Method is Modified)

The video coding method for encoding, which is employed in the video encoder section 113, may be any method in which motion compensation prediction is performed. For example, MPEG-2, MPEG-4, MPEG-4 AVC, or the like can be employed. Further, a plurality of coding methods may be employed in such a manner that they are changed dynamically as needed. With such an arrangement, it is possible to output streams of various coding methods, so that the number of reproducing apparatuses via which the streams are reproducible can be increased.

### (Modified Example 3: Plurality of Enhanced Layers are Generated)

At least two enhanced layer streams may be generated provided that the video coding method employed in the video encoder section 113 may be a coding method in which a reference frame is selectable from at least three decoded frames corresponding to frames that have been encoded previously.

For example, Fig. 5 shows an example in which in addition to a first enhanced layer stream 152, a second enhanced layer stream 153 is generated. Reference signs in Fig. 5 have the same meanings as in Fig. 2. Note however that pieces of encoded data of frames are sorted sequentially into the base layer stream 151, the second enhanced layer stream 153, the first enhanced layer stream 152, and the second enhanced layer stream 153 in this order. A relation between the base layer stream 151 and the first enhanced layer stream 152 is the same as has been already described above. In the modified example shown in Fig. 5, decoding is performed with the use of the second enhanced layer stream 153. This makes it possible to further decode an intermediate frame. Such an arrangement yields an effect that the number of selective reproduction qualities is increased.

### (Modified Example 4: Bidirectional Prediction)

The video encoder section 113 may use, as a reference frame for encoding of a target frame, not only a "past frame" whose display timing comes before that of the target frame, but also a "future frame" whose display timing comes after that of the target frame. Fig. 6 illustrates, for example, frames some of which are each encoded by use of frames positioned before and after the frame as reference frames. In Fig. 6, a frame indicated by "B" (hereinafter referred to as "B-frame") is a frame that is encoded by a bidirectional inter-frame prediction coding mode in which prediction is performed by use of a past frame which is to be displayed before a target frame to be encoded and a future frame which is to be displayed after the target frame. In this case, encoded data of the B-frame may be sorted into an enhanced layer stream 154. With the use of bidirectional prediction, a more accurate predicted image for the target frame can be obtained, in a case where prediction should be performed from a future frame. This reduces signal intensity of a residual image, thereby improving encoding efficiency.

### (Modified Example 5: Output Means is Modified)

The first output section 117 and the second output section 118 are assumed as communications control means, normally. However, such an arrangement may be also possible that at least one of them is memory means. The arrangement allows the scalable video stream generation apparatus to be applied to an on-demand transmission in which results of encoding are stored in a memory and the results of encoding are read from the memory by another transmission apparatus and sent to a communications path in response to a request from a user of a reproducing apparatus.

### (Modified Example 6: Variation of Output Stream Format)

The first output section 117 and the second output section 118 may outputs streams multiplexed in a packet format for transmission of MPEG-2 TS or the like. In a case where the format for MPEG-2 TS is used, PTS can be used as time (display timing) to be associated with the streams. This makes it possible to use various transmission channels via which MPEG-2 TS is transmitted. In a case where the coding method is MPEG-4 AVC, since Picture Timing SEI, which is a time per frame in a stream, is defined, Picture Timing SEI may be used as time to be associated with the streams. This allows the streams to be directly reproduced by a decoding apparatus for MPEG-4 AVC.

It can be also said that a scalable video stream generating apparatus according to one embodiment of the present invention is a scalable video stream generating apparatus including: a video encoder section for generating a stream by performing compression encoding on an input video image by motion compensation prediction; a reference frame memory section in which to store a reference frame to be used for the motion compensation prediction; a sorting section for sorting the stream into at least two streams; and an encode control section for controlling the video encoder section and the sorting section, the sorting section being controlled so as to sort the stream based on whether or not an encoded frame has been usable as a reference frame.

### [2: Scalable Video Stream Decoding Apparatus]

Fig. 7 is a block diagram illustrating an essential part of an arrangement of a scalable video stream decoding apparatus 200 according to one embodiment of the present invention. As illustrated in Fig. 7, the scalable video stream decoding apparatus 200 according to the present embodiment includes a first input section (stream receiving means) 210, a second input section (stream receiving means) 211, a first input stream memory section 212, a second input stream memory section 213, a reordering section (reordering means) 214, a reference frame memory section 215, a video decoder section (decoding means) 216, an output frame memory section 217, and an output section 218.

Even when the scalable video stream decoding apparatus 200 receives a base layer stream (encoded-image stream) 250 and an enhanced layer stream (encoded-image stream) 251, the scalable video stream decoding apparatus 200 reorders, before decoding the streams, encoded images included in the streams in accordance with respective pieces of display timing information of the encoded images, so as to obtain a single stream. On this account, the decoding may be performed on the single stream thus obtained by reordering. In view of this, even if the scalable video stream decoding apparatus 200 is provided with single decoding means, it can decode a plurality of encoded-image streams, thereby making it possible to simplify an arrangement of the apparatus.

### (Example of Operation)

The following describes one example of how the scalable video stream decoding apparatus 200 operates, more specifically.

The first input section 210 stores the base layer stream 250 sequentially into the first input stream memory section 212. The second input section 211 stores the enhanced layer stream 251 sequentially into the second input stream memory section 213.

The base layer stream 250 and the enhanced layer stream 251 may be streams obtained by encoding a video image so as to have temporal scalability. In addition, the enhanced layer stream 251 may be a stream that does not contain encoded data of frames to be used as reference frames. Such streams may be, for example, a base layer stream and an enhanced layer stream that are generated by the scalable video stream generating apparatus according to the present invention.

Further, the first input section 210 and the second input section 211 may be sections that can receive the base layer stream 250 and the enhanced layer stream 251, respectively, from various transmission channels. An example of the first input section 210 and the second input section 211 may be a receiving apparatus for wireless broadcasting.

The reordering section 214 reorders pieces of encoded data of the base layer stream 250 stored in the first input stream memory section 212 and pieces of encoded data of the enhanced layer stream 251 stored in the second input stream memory section 213, so as to send them as a single stream to the video decoder section 216.

Fig. 8 is a flowchart illustrating one repeating unit of a reordering process performed by the reordering section 214. The reordering section 214 repeats the following process until the encoded data stored in the first input stream memory section 212 and the encoded data stored in the second input stream memory section 213 are all processed.

As illustrated in Fig. 8, the reordering section 214 initially obtains display timing information (time) of headmost encoded data in the base layer stream 250 stored in the first input stream memory section 212 (Step S200), and obtains display timing information (time) of headmost encoded data in the enhanced layer stream 251 stored in the second input stream memory section 213 (Step S201).

The reordering section 214 then compares the display timings thus obtained (Step S202). In a case where the display timing of the headmost encoded data in the base layer stream 250 is earlier, the reordering section 214 obtains the headmost encoded data from the first input stream memory section 212 (Step S203), and sends it to the video decoder section 216 (Step S205). On the other hand, in a case where the display timing of the headmost encoded data in the enhanced layer stream 251 is earlier, the reordering section 214 obtains the headmost encoded data from the second input stream memory section 213 (Step S204), and sends it to the video decoder section 216 (Step S205). In general, it is necessary to input pieces of encoded data into the video decoder section 216 in order of decoding. However, in the present embodiment, the order of decoding of pieces of encoded data coincides with the order of respective pieces of display timing information assigned to respective streams, and therefore, the streams are reordered with the use of the display timings. Note however that, in a case where a video stream encoded by use of the aforementioned bidirectional prediction is handled, for example, there may be a case where the order of decoding does not coincide with the order of display timing information. In such a case, instead of the display timing information, decoding timing information indicative of a decoding start time of a target frame may be assigned to each frame in the scalable video stream generating apparatus, so that the reordering is performed in order of the decoding timing information.

In a case where no encoded data is included in the enhanced layer stream 251, the decoding is performed only on the base layer stream 250. Accordingly, in a case where no encoded data is included in the enhanced layer stream 251, the reordering section 214 does not performed comparison in Step 202, and may perform the process in Step S204 unconditionally.

Further, the reordering section 214 may extract a target encoded-image stream to be decoded, based on identifiers (for example, PID of a TS packet) assigned to the base layer stream 250 and the enhanced layer stream 251. This makes it possible to easily decode only the target encoded-image stream to be decoded.

As described above, the reordering section 214 reorders pieces of encoded data stored in the first input stream memory section 212 and the second input stream memory section 213 in order of display timings (in order of time), and sends them as a single stream to the video decoder section 216.

Upon receiving such a stream from the reordering section 214 as such, the video decoder section 216 decodes encoded data included in the stream thus received, in order of inputting. The procedure of the process performed by the video decoder section 216 may be a procedure used in a conventional video coder. That is, the video decoder section 216 performs variable-length decoding, inverse quantization, and inverse orthogonal transformation, so as to obtain a residual image. Further, the video decoder section 216 obtains a reference frame specified by the stream, from the reference frame memory section 215, and then generates a predicted image by use of a motion vector. The video decoder section 216 adds up the predicted image and the residual image to obtain an output frame (decoded image), and then stores the output frame in the output frame memory section 217.

As has been already described, the stream is provided with a flag indicative of whether or not a decoded frame is usable as a reference frame afterward. In a case where the flag indicates that the decoded frame is usable as a reference frame, the video decoder section 216 stores the output frame thus obtained into the reference frame memory section 215.

Finally, the output section 218 reads out the output frame from the output frame memory section 217 and outputs the output frame.

### (Advantages of the Present Embodiment)

As described above, the scalable video stream decoding apparatus 200 according to the present embodiment has such a simple arrangement that the second input section 211, the second input stream memory section 213, and the reordering section 214 are simply added to a conventional video stream decoding apparatus. The scalable video stream decoding apparatus 200 thus arranged can decode a video image at the same frame rate as that of an input video image, with the use of the base layer stream 250 and the enhanced layer stream 251, and reproduce the video image thus decoded.

Even in a case where the enhanced layer stream 251 is not inputted, the reordering section 214 sends only the base layer stream 250 to the video decoder section 216 so that the base layer stream 250 is decoded, as described above. Thus, the video image can be reproduced though the frame rate is low.

### (Modified Example 1: Coding Method is Modified)

A manageable video coding method that the video decoder section 216 can cope with should correspond to an encoding method employed by a video generating apparatus. However, the video decoder section 216 may be arranged to be capable of coping with a plurality of coding methods in advance, so that the video decoder section 216 can dynamically select a coding method from among them in accordance with which coding method is employed for a video stream to be inputted. Alternatively, the scalable video stream decoding apparatus 200 may be arranged to provide, in advance or as needed, a list of manageable coding methods, to a scalable video stream generating apparatus for generating the base layer stream 250 and the enhanced layer stream 251, so that a video coding method suitable for both the scalable video stream decoding apparatus 200 and the scalable video stream generating apparatus can be selected from the list. With the arrangement, the system does not depend on a coding method, so that the scalable video stream decoding apparatus can reproduce more various types of bitstreams.

### (Modified Example 2: Dealing with Delay)

The base layer stream 250 and the enhanced layer stream 251 may be transmitted via different transmission channels. For example, the base layer stream 250 may be transmitted via broadcasting, and the enhanced layer stream 251 may be transmitted via a communication. The transmission channels have different delay amounts. For example, retransmission, conversion of transmission methods in conformity to protocols, and the like are performed during the communication, thereby presumably causing delay of from a few milliseconds to several tens of seconds. Meanwhile, even in a case where the same transmission channel is used, the base layer stream 250 and the enhanced layer stream 251 have different transmission amounts, thereby possibly causing a difference between process times for the streams at intermediate equipment in the transmission channel. Even in such cases, the scalable video stream decoding apparatus 200 can deal with the delay or difference.

Fig. 9 is a flowchart illustrating a process performed in a case where one of two streams to be inputted into the scalable video stream decoding apparatus 200 is delayed.

Similarly to the example of the operation as describe above, the reordering section 214 initially obtains a display timing of headmost encoded data in the stream stored in the first input stream memory section 212 (Step S220) and obtains a display timing of headmost encoded data of the stream stored in the second input stream memory section 213 (Step S221).

Then, the reordering section 214 determines whether the display timing of the headmost encoded data of the base layer stream 250 is valid or not (Step S222). In a case where the display timing thereof is invalid (no valid encoded data is included in the base layer stream 250), the process is terminated without output of any encoded data. The reason is as follows: even if the enhanced layer stream 251 contains encoded data, the encoded data cannot be decoded without encoded data contained in the base layer stream 250. Therefore, in a case where not a single piece of encoded data of the base layer stream 250 is stored in the first input stream memory section 212, the subsequent processes are suspended.

Further, the reordering section 214 compares the obtained display timing T1 of the headmost encoded data in the base layer stream 250 with the obtained display timing T2 of the headmost encoded data in the enhanced layer stream 251, and regards an earlier one as Tmin (Step S222).

As described later, the reordering section 214 holds a display timing of a frame that has been outputted last time to the video decoder section 216. In a case where Tmin comes earlier than (is older than) the display timing of the frame having been outputted last time, the reordering section 214 abandons encoded data of the frame of Tmin, from the stream that includes the encoded data, and performs the process again (Step S224). The above arrangement can avoid the following problem: if one of the streams that are transmitted substantially at the same time is delayed in the middle of a transmission channel, the other one, which is received initially, cannot be reproduced.

Further, in a case where Tmin comes later than a given time, the reordering section 214 may terminate the process, too (Step S225). Note that the given time comes after a given period of time from the display timing of the frame that the reordering section 214 has outputted last time, which display timing is held by the reordering section 214. As described above, when one of the streams is delayed, data of the delayed stream is abandoned. However, if the delay is within a given period of time, it is not necessary to abandon the delayed stream. In this case, the process on the stream that comes first may be kept on hold, so that the delayed stream can be used for decoding.

The given period of time may be determined by preliminary measuring delaying amounts of the base layer stream 250 and the enhanced layer stream 251. Alternatively, the given period of time may be determined based on a history of receipt time or may be contained in additional information of the streams. Note that in a case where the input stream memory sections 212 and 213 do not have a sufficient free space, they output the streams without this control. With the above arrangement, an input delay of either of the streams can be disregarded as far as the input stream memory sections 212 and 213 allow, and the decoding can be performed by use of both of the streams.

### (Modified Example 3: Having Recording-reproducing Function)

The scalable video stream decoding apparatus 200 may have a recording-reproducing function. For example, a recording-reproducing section, which includes a recording memory, may be provided in parallel with the reordering section 214. The recording-reproducing section obtains at least one of the base layer stream 250 and the enhanced layer stream 251, and stores it in the recording memory. The recording-reproducing section then reads out the at least one of the base layer stream 250 and the enhanced layer stream 251 from the recording memory, and sends it to the reordering section 214. The reordering section 214 performs the aforementioned decoding operation afterwards. Such an arrangement allows a user to once record an input stream and play it anytime the user likes.

### (Modified Example 4: High-quality Picture by Recording)

In the aforementioned example of the recording and reproduction, the streams may be inputted at different timings. In this case, for example, one of the streams is inputted and recorded in the recording memory, and the other one of the streams is inputted at another timing and additionally recorded in the recording memory. Reproduction is performed with the use of both of the streams. In such a case where the belatedly inputted stream is additionally stored, file names may be assigned to the streams with regularity or the streams may be associated with each other by additional information, so that an apparatus can recognize that the belatedly inputted stream is associated with the stream that has been already recorded. Further, the streams may be added to the same file when being recorded, and they are read out separately for reproduction. Alternatively, a reordering process may be performed in the same manner as that of the reordering section 214 when the streams are recorded, so that both of the streams are recorded as a single stream. Such an arrangement, more specifically, an arrangement in which, for example, the base layer stream 250 is received via broadcasting and recorded, and the enhanced layer stream 251 is received afterwards via a communication and additionally recorded, yields such an effect that a high-quality video image can be reproduced with the use of both of the streams.

### (Modified Example 5: Variations of Input Stream Formats)

The base layer stream 250 and the enhanced layer stream 251 may be in any format in which encoded data can be associated with time one-by-one. For example, in a case of MPEG-2 TS, a stream corresponding to one frame is stored in a PES packet, and its corresponding time is stored as a PTS of a PES header.

Input of MPEG-2 TS requires a demultiplexing process to extract encoded data. In view of this, a demultiplexing section may be provided between the reordering section 214 and the video decoder section 216, so that the demultiplexing section may perform the demultiplexing process. Alternatively, the demultiplexing process may be performed at the first input section 210 and the second input section 211 when streams are inputted. In the latter method, in a case where the coding method is a MPEG-4 AVC method, Picture Timing SEI is recorded as times of frames, and therefore, Picture Timing SEI may be used. Further, in some cases, a stream corresponding to a plurality of frames may be stored in a single PES. In this case, the first input section 210 and the second input section 211 may perform demultiplexing when streams are inputted thereinto, which makes it possible to use Picture Timing SEI.

It can be also said that a scalable video stream decoding apparatus according to one embodiment of the present invention is a scalable video stream reproducing apparatus including: at least two input sections for receiving at least two streams generated by a scalable video stream generating apparatus of the present invention; a reordering section for reordering the at least two streams in accordance with time information assigned thereto, so as to put together the at least two streams as a single video stream; and a video decoder section for decoding the single video stream.

### [3: Power-saving Scalable Video Stream Decoding Apparatus]

Some of the latest compact information processing apparatuses, such as a mobile phone, have a video-stream reproducing function. Most of the apparatuses are driven by batteries, and in order to drive the apparatuses for long hours by batteries, a decrease in power consumption is desired. Especially, video-stream reproduction is performed via complicated processes, which requires plenty of electrical power. Thus, the decrease in power consumption of the apparatuses is strongly demanded. For example, Patent Literature 1 discloses a digital still camera apparatus in which power consumption is reduced. The apparatus, which is provided with internal display means like a liquid crystal viewfinder, controls an operation amount of decoding depending on whether or not the apparatus is connected to external equipment such as TV, thereby reducing power consumption. Further, as a concrete method for reducing the operation amount, Patent Literature 1 exemplifies a method in which the resolution, gradation, and frame rate of an image to be decoded by a decoding circuit are decreased.

However, the method in Patent Literature 1 requires a complex arrangement in which processes such as frame skipping and pixel skipping are additionally performed so as to eliminate a part of the decoding process in view of reduction in power consumption.

A scalable video stream decoding apparatus according to one embodiment of the present invention can reduce power consumption with a simple mechanism. Fig. 10 is a block diagram illustrating an essential part of an arrangement of a scalable video stream decoding apparatus 300 according to the present embodiment. As illustrated in Fig. 10, the scalable video stream decoding apparatus 300 of the present embodiment includes a first input section (stream receiving means) 310, a second input section (stream receiving means) 311, a scalable video decoder section (decoding means) 312, a sensor section (detection means) 313, an input control section (input control means) 314, and an input switching section 315.

The scalable video stream decoding apparatus 300 detects a state of the scalable video stream decoding apparatus 300, and determines, based on the state, whether at least one of the stream receiving means is caused to operate or not to operate.

With the arrangement, when the scalable video stream decoding apparatus 300 is in such a state that, for example, battery power is almost exhausted, the temperature of the apparatus is high, the cover of the apparatus is closed, the apparatus is on the move, the motion of an image is small, or the like, at least one of the stream receiving means is caused not to stop working so as to adjust the throughput of the decoding process appropriately and reduce the power consumption.

### (Example of Operation)

The following explains one example of how the scalable video stream decoding apparatus 300 operates.

The first input section 310 receives a base layer stream 350, and sends the stream thus received to the scalable video decoder section 312. The second input section 311 receives an enhanced layer stream 351, and sends the stream thus received to the scalable video decoder section 312.

The scalable video decoder section 312 decodes the base layer stream 350 and the enhanced layer stream 351, and outputs a moving image. An internal arrangement of the scalable video decoder section 312 is not especially limited in the present invention. However, the scalable video decoder section 312 may have the same arrangement as the aforementioned scalable video stream decoding apparatus 200 according to the present invention, for example.

The sensor section 313 is means for detecting battery power information of the scalable video stream decoding apparatus 300. The sensor section 313 sends the detected battery power information to the input control section 314. The input control section 314 determines whether or not the enhanced layer stream 351 is to be decoded, and controls an input of a stream, based on the information received from the sensor section 313.

Fig. 11 is a flowchart illustrating how the input control section 314 operates. The input control section 314 receives, from the sensor section 313, battery power information (Step S300), and compares it with a given threshold (Step S301). In a case where the battery power information is below the given threshold, the input control section 314 controls the input switching section 315 to be turned off (Step S302). In the meantime, in a case where the battery power information is not less than the given threshold, the input control section 314 controls the input switching section 315 to be turned on (Step S303).

The input switching section 315 is controlled by the input control section 314. When the input switching section 315 is turned on, the second input section 311 performs an input operation to receive the enhanced layer stream 351. In the meantime, when the input switching section 315 is turned off, the second input section 311 stops operating and does not receive the enhanced layer stream 351. Consequently, while the input switching section 315 is turned on, the scalable video decoder section 312 decodes an output frame by use of the base layer stream 350 and the enhanced layer stream 351. In the meantime, while the input switching section 315 is turned off, the scalable video decoder section 312 decodes an output frame by use of only the base layer stream 350.

### (Advantage of the Present Embodiment)

The above arrangement yields such an effect that the scalable video stream decoding apparatus 300 according to the present embodiment can restrain power consumption by reducing the throughput of decoding when battery power is almost exhausted, thereby making it possible to keep reproduction while extending operation time of the apparatus. Besides, in the scalable video stream decoding apparatus 300, the scalable video decoder section 312 is not provided with any special structure for power saving. On the contrary, the scalable video stream decoding apparatus 300 can yield the above effect with such a simple arrangement that the sensor section 313, the input control section 314, and the input switching section 315 are just additionally provided therein.

### (Modified Example 1: Sensor Section is Temperature Sensor)

The sensor section 313 may be a temperature sensor for obtaining temperature information of the scalable video stream decoding apparatus 300. In this case, the input control section 314 controls the input switching section 315 to be turned off when the temperature information is over a threshold, while controlling the input switching section 315 to be turned on when the temperature information is not more than the threshold. With the arrangement, when the temperature of the apparatus increases, decoding of the enhanced layer stream 351 is skipped so as to reduce the throughput of the decoding, thereby restraining heat generation and reducing power consumption.

### (Modified Example 2: Sensor Section is Display-cover Sensor)

In a case where the scalable video stream decoding apparatus 300 is incorporated in an apparatus provided with an openable and closable cover for the purpose of protecting a display surface, for example, the sensor section 313 may be a sensor for detecting opening or closing of the display cover of the apparatus. In this case, while the display cover is closed, the input control section 314 controls the input switching section 315 to be turned off. In the meantime, while the display cover is opened, the input control section 314 controls the input switching section 315 to be turned on. While the display cover of the apparatus is closed, a user is less likely to watch a video image. Accordingly, even if an image quality is decreased by omitting the decoding of the enhanced layer stream 351, the convenience for the user is not hampered. Thus, the above arrangement makes it possible to restrain power consumption without hampering the convenience for the user.

### (Modified Example 3: Sensor Section is Acceleration Sensor)

The sensor section 313 may be an acceleration sensor for detecting acceleration of the apparatus. In this case, when the acceleration is over a threshold, the input control section 314 controls the input switching section 315 to be turned off. Meanwhile, when the acceleration is not more than the threshold, the input control section 314 controls the input switching section 315 to be turned on. While the apparatus is being accelerated (e.g., the apparatus is being put down, held up, or swung), a user is less likely to watch a video image. Accordingly, even if an image quality is decreased by omitting the decoding of the enhanced layer stream 351, the convenience for the user is not hampered. Thus, the above arrangement makes it possible to restrain power consumption without hampering the convenience for the user.

### (Modified Example 4: Sensor Section is Motion Vector Sensor)

The sensor section 313 may be a sensor or program for detecting a motion vector obtained in the course of decoding by the scalable video decoder section 312. In this case, when an estimated value obtained from the motion vector, e.g., a composition of all vectors, is over a threshold, the input control section 314 controls the input switching section 315 to be turned on. In the meantime, when the estimated value is not more than the threshold, the input control section 314 controls the input switching section 315 to be turned off. When a decoded video image has less motion, omission of decoding of a subsequent frame contained in the enhanced layer stream 351 does not make a big difference in the video image to the eye of a user. Accordingly, the convenience for the user is not hampered. In view of this, the above arrangement makes it possible to restrain power consumption without hampering the convenience for the user.

### (Modified Example 5: Combination of Several Sensors)

The sensor section 313 may be made up of several sensor means. In this case, the input control section 314 controls an ON/OFF state of the input switching section 315 based on all pieces of information from the several sensors.

In the example of operation and the modified example, such concrete wordings "not less than", "not more than", "over", and "below" are used. However, these wordings do not strictly specify whether equivalence is included or not, and for example, "not less than" may be substitutable to "over" or vice versa.

### (Modified Example 6: Continuous Switching of Control)

Further, in the above example, the input control section 314 compares values (continuous values) from the sensor section 313 with a threshold, so that the input switching section 315 is controlled by two values, ON and OFF. However, the input control section 314 may continuously control the input switching section 315. For example, in a case where a value obtained from the sensor section 313 is almost the same as a threshold, the input control section 314 may intermittently control the input switching section 315 to switch between ON and OFF at equal (1:1) time intervals.

### (Modified Example 7: Control is Hold)

Such an arrangement may be also possible that a switch timer section is further provided for the input control section 314 so that the input control section 314 controls the input switching section 315 just after a certain period of time from when information from the sensor section 313 satisfies a condition that causes the input switching section 315 to switch between ON and OFF. The arrangement can restrain such a phenomenon that the ON/OFF control of the input switching section 315 is frequently caused because information from the sensor section exceeds a threshold many times, and a reproduced video image appears unnatural.

### (Modified Example 8: User Operation is Available)

The scalable video stream decoding apparatus 300 may be further provided with a user operation section so that the user can set various thresholds or control the input switching section 315. The arrangement can decrease an image quality in response to a user instruction and restrain power consumption.

### (Modified Example 9: Learning of Control Condition)

Such an arrangement may be also possible that an optimum control is performed based on user's operation history. That is, the input control section 314 stores a state (e.g., temperature) of the apparatus when a user controls the input switching section 315. When the apparatus comes into the same state next time, the input switching section 315 is controlled in the same manner as the user's control. The arrangement makes it possible to precisely perform the ON/OFF control of the decoding of the enhanced layer stream 351 in conformity to user's preference, thereby improving the scalable video stream decoding apparatus 300 in view of both convenience and power saving.

It can be said that a scalable video stream reproducing apparatus according to one embodiment of the present invention is a scalable video stream reproducing apparatus including: a sensor section for detecting a state of the scalable video stream reproducing apparatus; an input control section for determining whether or not an input of a stream is controlled, based on the state of the scalable video stream reproducing apparatus, which state is detected by the sensor section; and an input switching section for stopping the input of a stream into at least one input section, in response to the control from the input control section.

### (Exemplary Arrangement Compatible with Existing Broadcast System)

With the use of the scalable video stream generating apparatus of the present invention and the scalable video stream decoding apparatus of the present invention, it is possible to put into practice temporal scalable compliant broadcasting that is compatible with an existing broadcast system. The following takes as an example a case where the temporal scalable compliant broadcasting is operated compatibly with 1-segment receiving service (hereinafter referred to as one-segment broadcasting) for portable terminals such as a mobile phone in terrestrial digital broadcasting (ISDB-T), which is an existing broadcast system.

One-segment broadcasting employs MPEG-4 AVC as a coding method of a video stream, and MPEG-2 TS as a stream format. The scalable video stream generating apparatus of the present invention and the scalable video stream decoding apparatus of the present invention can use the MPEG-4 AVC and the MPEG-2 TS, as has been already described above. In order to realize compatibility with one-segment broadcasting, a PID (packet identifier) attached to each TS packet in MPEG-2 TS is used.

A PID is an identifier that identifies which type of stream the stream contained in a target packet is, a stream of video data, a stream of audio data, a stream of caption data, or a stream of the like data. Note that the value of a PID does not directly indicate a stream type. There is defined, independently from the PID, "stream_type" for identifying respective stream types of video, audio, caption, and the like constituting a broadcast. A table (PMT) indicative of a correspondence relationship between each PID and each stream_type is transmitted as a packet independent from each stream. In a system using MPEG-2 TS, a stream type corresponding to each PID is identified by referring to the PMT. Thus, streams can be decoded and reproduced by use of decoders suitable for respective types of the streams.

Stream_type, represented by 0x1 to 0x1B shown in Table 1, for use in existing digital television broadcasting starting with one-segment broadcasting is defined as shown in Table 1.

### [Table 1]

**Table 1. Stream Types**

| stream_type | DEFINITION |
|---|---|
| 0x01 | ISO/IEC 11172Video(MPEG-1 VIDEO) |
| 0x02 | ITU-T Rec.H.262 \| ISO/IEC 13818-2(MPEG-2 VIDEO) |
| 0x06 | ITU-T Rec.H.222 \| ISO/IEC 13818-1(MPEG-2 SYSTEMS) PES packets containing private data (Caption Data) |
| 0x0D | ISO/IEC 13818-6 (For Data Broadcasting) |
| 0x0F | ISO/IEC 13818-7(MPEG2 AAC) |
| 0x1B | ITU-T Rec.H.264 \| ISO/IEC 13396-10Video(MPEG-4 AVC) |
| 0x1C | For Enhanced Layer Stream (New Allocation) |

Assume that temporal scalable compliant broadcasting that is compatible with one-segment broadcasting is put into practice with the use of the scalable video stream generating apparatus of the present invention and the scalable video stream decoding apparatus of the present invention. Here, stream_type indicative of an enhanced layer stream is defined by 0x1C, for example, and respective streams are TS-packetized by the first and second output sections of the scalable video stream generating apparatus. In this case, a PID for stream_type = 0x1B, which is indicative of a video stream similar to a stream for use in conventional one-segment broadcasting, may be assigned to a base layer stream, while a PID for stream_type = 0x1C, which is indicative of an enhanced layer stream, may be assigned to an enhanced layer stream.

In the arrangement, for a conventional video stream decoding apparatus that can decode only a video stream of MPEG-4 AVC, enhanced layer streams are discarded as unknown streams, and only a base layer stream can be decoded. On the other hand, in the above arrangement, the scalable video stream decoding apparatus of the present invention can decode and reproduce a target video stream as follows: (a) the reordering section checks PIDs of received MPEG-2 TS packets, appropriately extracts a base layer stream and an enhanced layer stream that constitute a target video stream to be decoded, obtains display timings from PTSs assigned to respective TS packets, and reorders data in the base layer stream and the enhanced layer stream in order of decoding; and (b) the video decoder section decodes and reproduces the target video stream. Note that instead of reordering data in the base layer stream and the enhanced layer stream with the use of PTSs assigned to the TS packets, the reordering may be performed based on DTSs (Decode Time Stamp; decoding timing information) assigned to the TS packets. In the one-segment broadcasting, it is possible to select, as display timing information, between (a) PTS in MPEG-2 TS and (b) Picture Timing SEI by optionally encoding, by changing setting values of nal_hrd_parameters_present_flag or vcl_hrd_parameters_present_flag in VUI parameters shown in Table 2 as below. However, as has been already described above, the present invention is arranged such that PTS is assigned to each frame. In view of this, as shown in Table 2, in a case where scalable compliant broadcasting is performed, Picture Timing SEI may be arranged not to be selected regularly.

### [Table 2]

**Table 2. Practical Parameters of VUI parameters**

| Flag Name | One-Segment Broadcasting | Scalable Compliant Broadcasting |
|---|---|---|
| aspect_ratio_info_present_flag | 0 | Same on the left |
| overscan_info_present_flag | 0 | Same on the left |
| video_signal_type_present_flag | 0 | Same on the left |
| chroma_loc_info_present_flag | 0 | Same on the left |
| timing_info_present_flag | 1 | Same on the left |
| num_unit_in_tick | 1001*N | Same on the left |
| time_scale | 2400 or 3000 | Same on the left |
| fixed_frame_rate_flag | 0 or 1 | Same on the left |
| nal_hrd_parame ters_pre se nt_flag | 0 or 1 | 0 |
| vcl_hrd_parameters_present_flag | 0 or 1 | 0 |
| low_delay_hrd_flag | 0 | Same on the left |
| pic_struct_present_flag | 0 | Same on the left |
| bitstream_restriction_flag | 0 or 1 | Same on the left |
| motion_vectors_over_pic_boundaries_flag | 0 or 1 | Same on the left |
| max_bytes_per_pic_denom | 0-16 | Same on the left |
| max_bits_per_mb_denom | 0-16 | Same on the left |
| log2_max_mv_length_horizontal | 0-9 | Same on the left |
| log2_max_mv_length_vertical | 0-9 | Same on the left |
| num_reorder_frames | 0 | Same on the left |
| max_dec_frame_buffering | 1-3 | Same on the left |

As has been already describe above, encoding of a video stream may be performed by use of MPEG-4 AVC such that a frame to be a base layer stream is encoded as a reference frame and a frame to be an enhanced layer stream is encoded as a non-reference frame.

For example, a video image having a frame rate of 30 fps is encoded such that every other frame is encoded as a reference frame, thereby obtaining, as a base layer, a video stream having a frame rate of 15 fps, which is an upper limit of a frame rate defined by one-segment broadcasting. As such, it is possible to realize broadcasting which keeps compatibility with one-segment broadcasting in terms of the base layer and which has a high frame rate (of 30 fps) with the use of an enhanced layer stream.

However, in MPEG-4 AVC, a video stream to be transmitted includes data called Sequence Parameter Set (see Table 3), which describes parameters common in the video stream, Among the parameters, there is a parameter called level_idc, which is indicative of capability level of a decoder necessary to decode the video stream.

### [Table 3]

**Table 3. Practical Parameters of Sequence Parameter Set**

| Flag Name | One-Segment Broadcasting | Scalable Compliant Broadcasting |
|---|---|---|
| profile_idc | 66 | Same on the left |
| constraint_set0_flag | 1 | Same on the left |
| constraint_set1_flag | 1 | Same on the left |
| constraint_set2_flag | 1 | Same on the left |
| level_idc | 12 | 13 |
| seq_parameter_set_id | 0-31 | Same on the left |
| log2_max_frame_num_minus4 | 0-12 | Same on the left |
| pic_order_cnt_type | 2 | Same on the left |
| num_ref_frames | 1 or 2 or 3 | Same on the left |
| gaps_in_frame_num_value_allowed_flag | 0 | Same on the left |
| pic_width_in_mbs_minus 1 | 19 | Same on the left |
| pic_height_in_map_units_minus 1 | 14 or 11 | Same on the left |
| frame_mbs_only_flag | 1 | Same on the left |
| direct_8x8_inference_flag | 1 | Same on the left |
| frame_cropping_flag | 0 or 1 | Same on the left |
| frame_crop_left_offset | 0 | Same on the left |
| frame_crop_right_offset | 0 | Same on the left |
| frame_crop_top_offset | 0 | Same on the left |
| frame_crop_bottom_offset | 6 | Same on the left |
| vui_parameters_present_flag | 1 | Same on the left |

The data, Sequence Parameter Set, is common between the base layer stream and the enhanced layer stream. Therefore, if a video stream is encoded at a high frame rate, it may be necessary to set the capability level required to decode the video stream to be higher than the capability level defined in the one-segment broadcasting, as in Table 3, in some cases. In such a case where a value required for a decoder to decode the video stream is set higher than a specified value of the one-segment broadcasting, the video stream encoded at such a high frame rate may be regarded as a stream beyond the capability level of a decoder of an existing one-segment receiving apparatus. This may cause such a problem that the video stream is not reproduced.

In view of this, the video encoder section in the scalable video stream generating apparatus may be arranged such that even in a case where a video stream is encoded at a high frame rate, the same Sequence Parameter Set as in the existing one-segment broadcasting is transmitted, so that a scalable video stream decoding apparatus may decode and reproduce the video stream by discarding the setting value of level_idc.

As described above, with the use of the scalable video stream generating apparatus and the scalable video stream decoding apparatus, it is possible to put into practice temporal scalable compliant broadcasting that is compatible with the existing broadcast system. Having a compatibility with the existing broadcast system yields such an effect that constituent elements of an existing video stream generating apparatus and an existing video stream decoding apparatus can be partially shared by the scalable video stream generating apparatus of the present invention and the scalable video stream decoding apparatus of the present invention, thereby making it possible to establish a system of the temporal scalable compliant broadcasting at low cost. Further, there is another advantage as follows: the system has compatibility with one-segment broadcasting, for which receiving terminals are being widely used. Accordingly, this eases concerns about penetration of receiving terminals at the start of new broadcasting.

Moreover, in a case where equipment such as a mobile phone is provided with a receiving function to receive a broadcast in the system, low-end terminals, which are reasonable in price, may be arranged to have a reproducing function for a base layer stream only, by use of cheap constituent components that are widely used in existing one-segment receiving terminals. This makes it possible to reduce the production cost of the low-end terminals. On the other hand, high-end terminals, which are expensive in price, may be arranged to have a high-frame-rate and high-grade reproduction function by use of expensive but high-performance constituent components that are capable of receiving and decoding an enhanced layer stream as well as a base layer stream. As such, it is advantageously possible for equipment manufactures to select arrangements depending on terminal grade.

It is only the base layer stream that should have compatibility with one-segment broadcasting. In view of this, as has been already described above, the enhanced layer stream may be transmitted via another transmission chancel different from that for the base layer stream. When the enhanced layer stream is delivered via another transmission channel as such, the following service targeting only on specific customers can be realized for the purpose of pulling in more customers: for example, an enhanced layer stream is transmitted via a mobile phone network of a specific mobile-service provider so that only users of the mobile-service provider can receive a high-definition video image at a high frame rate; or an enhanced layer stream is delivered only in a specific area such as a public transportation facility or a shopping mall, so that a high-definition video image can be provided at a high frame rate. As another example, a modulation method to be used to transmit an enhanced layer stream may be a modulation method having a higher transmission rate and lower error resilience than those of a modulation method to be used to transmit a base layer stream. In such an arrangement, areas in which the enhanced layer stream can be received with no error as well as the base layer stream are limited, whereas it is possible to allocate a more data amount to encoded images due to the enhanced layer stream. That is, in an environment such as at home in which a reception state of transmission waves is good, it is possible to reproduce a more high-definition video image by decoding even the enhanced layer stream. Meanwhile, in an environment such as during high-speed movement in which a reception state of transmission waves is poor, the enhanced layer stream in which reception error remains is abandoned and only the base layer stream is reproduced so that a minimum reproduction quality is ensured.

### (Common Variation of Each Apparatus of the Present Invention)

The scalable video stream decoding apparatus of the present invention is supposed to be a compact apparatus that works on batteries and is portable, but may be, for example, an in-vehicle or stationary apparatus to which power is externally supplied.

The scalable video stream generating apparatus of the present invention is supposed to be a stationary apparatus, but may be an in-vehicle apparatus or an apparatus that works on batteries and is portable, likewise.

Transmission via various sections including a transmission channel of bitstreams may be via a wire communication or wireless communication, provided that the communication is a broad-sense communication including broadcasting. The wireless communication may be a method in which a communication is performed by radio waves including visible light and an infrared ray, or by microparticles such as electrons or quantum. In this case, the radio waves or microparticles may be transmitted directly from a transmission apparatus to a receiving apparatus. Alternatively, the radio waves or microparticles may be retransmission waves from a retransmission apparatus or an intermediary apparatus such as an artificial satellite or a base station on the ground; or reflective waves obtained by use of a structural object, a surface of the moon, a surface of earth, a water surface, an ionosphere, or the like. In conformity with retransmission, a frequency, a signal system or the like may be changed. The wire communication may be a method in which electric current is supplied to or a vibration is produced in a solid or gelatinous medium starting with an organic material such as a metal wire or protein, or may be a product in which light passes through fiber optics or the like. Alternatively, the wire communication may be a method in which electric current is supplied to or a vibration is produced in a medium in a form of a cylindrical long object into which various types of liquids or gasses are filled.

Further, in a case where a memory is used as an input or output section in the apparatuses, the memory may be arranged detachable from the apparatuses so that the memory is portable. With the arrangement, the memory can be used in another apparatus by attaching thereto, and managed and held separately from the apparatuses. The arrangement is highly convenient.

Each of the memory sections may be any memory provided that a digital state can be retained for a certain period of time by use of a semiconductor, magnetization, light, chemical reaction, or the like. The memory may be in any form of disk, tape, tube, sphere, polygon, branch, fluid, or the like. Further, either of (a) an arrangement in which a memory section is provided following a communication path and no memory is provided in the apparatus and (b) an arrangement in which a memory section is provided following a communication path and a memory is also provided in the apparatus yields the same effects that have been described above. Each of the other means exemplified by another means is not exclusively selected or provided. A plurality of means may be provided concurrently and selected dynamically, or may operate independently or emphatically in parallel or series.

The apparatuses that carry out the aforementioned operations may be realized by way of hard-wired logic or software as executed by a CPU (Central Processing Unit) as follows:

The scalable video stream generating apparatus 100, the scalable video stream decoding apparatus 200, and the scalable video stream decoding apparatus 300 each include a CPU and memory devices (memory media). The CPU executes instructions in control programs realizing the functions thereof. The memory devices include a ROM (read only memory) which contains control programs thereof, a RAM (random access memory) to which the control programs are loaded in an executable format, and a memory containing the control programs and various data.

The objective of the present invention can also be achieved by a given storage medium. The storage medium may be a computer-readable storage medium containing control program code (executable program, intermediate code program, or source program) for the above apparatuses 100, 200, 300, which is software realizing the aforementioned functions. The storage medium may be mounted to the above apparatuses 100, 200, 300. In the arrangement, the apparatuses as a computer (or CPU, MPU) retrieve and execute the program code contained in the storage medium.

The storage medium that provides the apparatuses 100, 200, 300, with the program code is not limited to any special structure or type. The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The object of the present invention can be achieved by arranging the apparatuses 100, 200, 300 to be connectable to a communications network so that the program code may be delivered over the communications network. The communications network is not limited to any particular type or in any particular manner as long as the program code can be delivered to the apparatuses 100, 200, 300. The communications network may be, for example, the Internet, an intranet, extranet, LAN, ISDN, VAN, CATV communications network, virtual dedicated network (virtual private network), telephone line network, mobile communications network, or satellite communications network.

The transfer medium which makes up the communications network is not limited to any particular arrangement or type provided that the transfer medium is a given medium that can transfer the program code. The transfer medium may be, for example, wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (Registered Trademark), 802.11 wireless, HDR, mobile telephone network, satellite line, or terrestrial digital network. The present invention encompasses a form of a computer data signal embedded into a carrier wave, in which form the program code is realized by electronic transmission.

### Industrial Applicability

The present invention is applicable to a system and the like for delivering digital video.

### Reference Signs List

- 1: Input Video Image
- 2: Scalable Video Stream Generating Apparatus
- 3: Base Layer Stream
- 4: Enhanced Layer Stream
- 5: Transmission Channel
- 6: Video Stream Reproducing Apparatus
- 7: Scalable Video Stream Reproducing Apparatus
- 8: Decoded Low-Frame-Rate Video Image
- 9: Decoded High-Frame-Rate Video Image
- 10: Base Layer Stream Input Section
- 11: Enhanced Layer Stream Input Section
- 12: Base Layer Video Coder
- 13: Enhanced Layer Video Coder
- 14: Enhanced-Layer Reference Frame Memory
- 15: Base-Layer Reference Frame Memory
- 16: Reordering Section
- 17: Output Frame Memory
- 18: Display Section
- 100: Scalable Video Stream Generating Apparatus
- 110: Video Image Input Section
- 111: Input Frame Memory Section
- 112: Encode Control Section
- 113: Video Encoder Section (Encoding Means)
- 114: Reference Frame Memory Section (Side of Scalable Video Stream Generating Apparatus)
- 115: Code Buffer Memory Section
- 116: Sorting Section (Sorting Means)
- 117: First Output Section
- 118: Second Output Section
- 200: Scalable Video Stream Decoding Apparatus
- 210: First Input Section (Stream Receiving Means)
- 211: Second Input Section (Stream Receiving Means)
- 212: First Input Stream Memory Section
- 213: Second Input Stream Memory Section
- 214: Reordering Section (Reordering Means)
- 215: Reference Frame Memory Section (Side of Scalable Video Stream Reproducing Apparatus)
- 216: Video decoder Section (Decoding Means)
- 217: Output Frame Memory Section
- 218: Output Section
- 300: Scalable Video Stream Decoding Apparatus
- 310: First Input Section (Stream Receiving Means)
- 311: Second Input Section (Stream Receiving Means)
- 312: Scalable Video decoder Section (Decoding Means)
- 313: Sensor Section (Detection Means)
- 314: Input Control Section (Input Control Means)
- 315: Input Switching Section
- 150: Input Video Image
- 151, 250, 350: Base Layer Stream
- 152 to 154, 251, 351: Enhanced Layer Stream
- S100: Coding Mode Determination Step
- S101: Intra Prediction Coding instruction, Reference Frame Instruction Step
- S102: Layer Selecting Step
- S103: Inter-Frame Prediction Coding Instruction, Reference Frame Instruction Step
- S104: Inter-Frame Prediction Coding Instruction, Non-Reference Frame Instruction Step
- S120: Coding Mode Determination Step
- S121: Reference Frame Obtaining Step
- S122: Motion Vector Finding Step
- S123: Residual Image Forming Step
- S124: Orthogonal Transformation, Quantization Step
- S125: Reference Frame Instruction Determination Step
- S126: Inverse-Quantization, Inverse-Orthogonal Transformation Step
- S127: Decode Image Forming Step
- S128: Reference Frame Storing Step
- S129: Variable-Length Coding Step
- S200, S220: First Streaming Time Obtaining Step
- S201, S221: Second Streaming Time Obtaining Step
- S222: First Streaming Time validity Determination Step
- S223: Time Calculation Step
- S224: Past Time Determination Step
- S225: Future Time Determination Step
- S202, S226: Time Comparing Step
- S203, S227: First Stream Takeout Step
- S204, S228: Second Stream Takeout Step
- S205, S229: Stream Sending Step
- S300: Battery Power Information Obtaining Step
- S301: Threshold Comparing Step
- S302: Input Switch OFF Step
- S303: Input Switch ON Step

## Claims

1. A scalable video stream generating apparatus comprising:
encoding means for encoding a plurality of input frames by use of motion compensation prediction so as to form encoded images; and
sorting means for sorting the encoded images thus formed by the encoding means, into a plurality of encoded-image streams,
the sorting means performing the sorting based on whether or not an encoded image to be sorted has been used as a reference frame for the motion compensation prediction performed when the encoding means encodes an input frame, and
the sorting means assigning different identifiers to the plurality of encoded-image streams into which the encoded images have been sorted.

2. A scalable video stream decoding apparatus comprising:
at least one stream receiving means for receiving a plurality of encoded-image streams generated by a scalable video stream generating apparatus as set forth in claim 1;
reordering means for (i) extracting at least one encoded-image stream to be decoded from among the plurality of encoded-image streams thus received by the at least one stream receiving means, based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and
decoding means for decoding the encoded images thus reordered by the reordering means.

3. The scalable video stream decoding apparatus as set forth in claim 2, wherein the at least one stream receiving means includes a plurality of stream receiving means,
the scalable video stream decoding apparatus further comprising:
detection means for detecting a state of the scalable video stream decoding apparatus; and
input control means for controlling at least one of the plurality of stream receiving means to operate or not to operate, in accordance with the state detected by the detection means.

4. A scalable video stream decoding method comprising the steps of:
(a) receiving a plurality of encoded-image streams generated by a scalable video stream generating apparatus as set forth in claim 1;
(b) performing a reordering process of (i) extracting at least one encoded-image stream to be decoded from among the plurality of encoded-image streams thus received in the step (a), based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and
(c) decoding the encoded images thus reordered in the step (b).

5. A control method for controlling a scalable video stream decoding apparatus,
the scalable video stream decoding apparatus including:
a plurality of stream receiving means for receiving a plurality of encoded-image streams generated by a scalable video stream generating apparatus as set forth in claim 1;
reordering means for (i) extracting at least one encoded-image stream to be decoded from among the plurality of encoded-image streams thus received by the plurality of stream receiving means, based on identifiers assigned to the plurality of encoded-image streams, and (ii) reordering, in order of decoding, encoded images constituting the at least one encoded-image stream thus extracted, in accordance with respective pieces of display timing information or decoding timing information of the encoded images; and
decoding means for decoding the encoded images thus reordered by the reordering means,
said control method comprising the steps of:
(a) detecting a state of the scalable video stream decoding apparatus; and
(b) performing an input control of controlling at least one of the plurality of stream receiving means to operate or not to operate, in accordance with the state detected in the step (a).

6. A scalable video stream generation method comprising the steps of:
(a) encoding a plurality of input frames by use of motion compensation prediction so as to form encoded images; and
(b) sorting the encoded images thus formed in the step (a), into a plurality of encoded-image streams,
in the step (b), the sorting being performed based on whether or not an encoded image to be sorted has been used as a reference frame for the motion compensation prediction performed when the encoding means encodes an input frame, and different identifiers being assigned to the plurality of encoded-image streams into which the encoded images have been sorted.

7. A scalable video stream decoding program for causing a scalable video stream decoding apparatus as set forth in claim 2 or 3,
said scalable video stream decoding program causing a computer to function as each of the means of the scalable video stream decoding apparatus.

8. A scalable video stream generation program for causing a scalable video stream generating apparatus as set forth in claim 1 to operate,
said scalable video stream generation program causing a computer to function as each of the means of the scalable video stream generating apparatus.

## Amended claims

### Amended claims under Art. 19.1 PCT

**1.** Amended) A scalable video stream generating apparatus for generating scalable video streams that are decodable by either of (a) a first decoding apparatus, which decodes a moving image from an encoded-image stream to which a predetermined identifier is assigned, and (b) a second decoding apparatus, which decodes a moving image from the encoded-image stream to which the predetermined identifier is assigned and at least one encoded-image stream to which an identifier different from the predetermined identifier is assigned,
said scalable video stream generating apparatus comprising:
encoding means for encoding a plurality of input frames by use of motion compensation prediction so as to form encoded images; and
sorting means for sorting the encoded images thus formed by the encoding means, into a plurality of encoded-image streams included in the scalable video streams,
the sorting means performing the sorting based on whether or not an encoded image to be sorted has been used as a reference frame for the motion compensation prediction performed when the encoding means encodes an input frame, and
the sorting means assigning identifiers to the plurality of encoded-images streams into which the encoded images have been sorted, in such a manner that (i) the predetermined identifier is assigned to an encoded-image stream into which encoded images used as reference frames for the motion compensation prediction have been sorted, and (ii) the identifier different from the predetermined identifier is assigned to an encoded-image stream into which encoded images not used as reference frames for the motion compensation prediction have been sorted.

**2.** A scalable video stream decoding apparatus comprising:
at least one stream receiving means for receiving a plurality of encoded-image streams generated by a scalable video stream generating apparatus as set forth in claim 1;
reordering means for (i) extracting at least one encoded-image stream to be decoded from among the plurality of encoded-image streams thus received by the at least one stream receiving means, based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and
decoding means for decoding the encoded images thus reordered by the reordering means.

**3.** The scalable video stream decoding apparatus as set forth in claim 2, wherein the at least one stream receiving means includes a plurality of stream receiving means,
the scalable video stream decoding apparatus further comprising:
detection means for detecting a state of the scalable video stream decoding apparatus; and
input control means for controlling at least one of the plurality of stream receiving means to operate or not to operate, in accordance with the state detected by the detection means.

**4.** A scalable video stream decoding method comprising the steps of:
(a) receiving a plurality of encoded-image streams generated by a scalable video stream generating apparatus as set forth in claim 1;
(b) performing a reordering process of (i) extracting at least one encoded-image stream to be decoded from among the plurality of encoded-image streams thus received in the step (a), based on identifiers assigned to the plurality of encoded-image streams, and (ii) reordering, in order of decoding, encoded images included in the at least one encoded-image stream thus extracted, in accordance with respective pieces of display timing information or decoding timing information of the encoded images; and
(c) decoding the encoded images thus reordered in the step (b).

**5.** A control method for controlling a scalable video stream decoding apparatus,
the scalable video stream decoding apparatus including:
a plurality of stream receiving means for receiving a plurality of encoded-image streams generated by a scalable video stream generating apparatus as set forth in claim 1;
reordering means for (i) extracting at least one encoded-image stream to be decoded from among the plurality of encoded-image streams thus received by the plurality of stream receiving means, based on identifiers assigned to the plurality of encoded-image streams, and (ii) reordering, in order of decoding, encoded images constituting the at least one encoded-image stream thus extracted, in accordance with respective pieces of display timing information or decoding timing information of the encoded images; and
decoding means for decoding the encoded images thus reordered by the reordering means,
said control method comprising the steps of:
(a) detecting a state of the scalable video stream decoding apparatus; and
(b) performing an input control of controlling at least one of the plurality of stream receiving means to operate or not to operate, in accordance with the state detected in the step (a).

**6.** Amended) A scalable video stream generation method for generating scalable video streams that are decodable by either of (a) a first decoding apparatus, which decodes a moving image from an encoded-image stream to which a predetermined identifier is assigned, and (b) a second decoding apparatus, which decodes a moving image from the encoded-image stream to which the predetermined identifier is assigned and at least one encoded-image stream to which an identifier different from the predetermined identifier is assigned,
said method comprising the steps of:
(a) encoding a plurality of input frames by use of motion compensation prediction so as to form encoded images; and
(b) sorting the encoded images thus formed in the step (a), into a plurality of encoded-image streams included in the scalable video streams, in the step (b), the sorting being performed based on whether or not an encoded image to be sorted has been used as a reference frame for the motion compensation prediction performed when an input frame is encoded in the step (a), and
identifiers being assigned to the plurality of encoded-image streams into which the encoded images have been sorted, in such a manner that: (i) the predetermined identifier is assigned to an encoded-image stream into which encoded images used as reference frames for the motion compensation prediction have been sorted, and (ii) the identifier different from the predetermined identifier is assigned to an encoded-image stream into which encoded images not used as reference frames for the motion compensation prediction have been sorted.

**7.** A scalable video stream decoding program for causing a scalable video stream decoding apparatus as set forth in claim 2 or 3,
said scalable video stream decoding program causing a computer to function as each of the means of the scalable video stream decoding apparatus.

**8.** Amended)
The scalable video stream generating apparatus as set forth in claim 1, wherein:
the encoding means performs, on the plurality of input frames, either intra prediction coding or inter-frame prediction coding in which a target input frame is encoded by using, as a reference frame, only a frame whose display timing comes before that of the target input frame.

**9.** Added)
A scalable video stream generation program for causing a scalable video stream generating apparatus as set forth in claim 1 or 8 to operate,
said scalable video stream generation programs causing a computer to function as each of the means of the scalable video stream generating apparatus.

Statement under Art. 19.1 PCT
1. Amendments

Amended Claim 1 is such that original Claim 1 as of filing of the international application is limited by the contents in the Specification of the subject application, paragraphs [0139] to [0155]. Amended Claim 6 is similarly such that original Claim 6 as of filing of the international application is limited by the contents in the Specification of the subject application, paragraphs [0139] to [0155].

Amended Claim 8 is a dependent claim depending from Claim 1. Amended Claim 8 is based on the contents of the Specification originally filed as the international application, paragraphs [0048] and [0079], and Figure 2 and Figure 5.

Original Claim 8 as of filing of the international application is renumbered to Claim 9, and amended to change its dependency.

2. Explanation

The inventions according to amended Claims 1 and 6 are "for generating scalable video streams that are decodable by either of (a) a first decoding apparatus, which decodes a moving image from an encoded-image stream to which a predetermined identifier is assigned, and (b) a second decoding apparatus, which decodes a moving image from the encoded-image stream to which the predetermined identifier is assigned and at least one encoded-image stream to which an identifier different from the predetermined identifier is assigned". Further, the inventions according to amended Claims 1 and 6 are arranged such that "identifiers are assigned to the plurality of encoded-images streams into which the encoded images have been sorted by the sorting means, in such a manner that (i) the predetermined identifier is assigned to an encoded-image stream into which encoded images to be used as reference frames for the motion compensation prediction have been sorted, and (ii) the identifier different from the predetermined identifier is assigned to an encoded-image stream into which encoded images not to be used as reference frames for the motion compensation prediction have been sorted". The inventions according to amended Claims 1 and 6 of the subject application having such an arrangement are different from techniques disclosed in any of the Documents cited in the International Search Report.

Further, the invention of amended Claim 8 of the subject application is arranged such that "encoded images obtained by inter-frame prediction coding in which a target input frame is encoded by using, as a reference frame, only a frame whose display timing comes before that of the target input frame" are sorted into a plurality of encoded image streams. The invention of amended Claim 8 of the subject application having such an arrangement is different from techniques disclosed in any of the Documents cited in the International Search Report.
